# EUROPÄISCHE PATENTSCHRIFT

(11) **EP 3 632 056 B1**
(45) Veröffentlichungstag und Bekanntmachung des Hinweises auf die Patenterteilung: **08.12.2021**
(21) Anmeldenummer: 18726115.1
(22) Anmeldetag: 17.05.2018
(51) Int. Cl.: H04L 12/403, H04L 12/423, H04L 12/40

(54) **INITIALISIERUNG EINES LOKALBUSSES**
INITALIZATION OF A LOCAL BUS
INTITIALISATION D'UN BUS LOCAL

(30) Priorität: 24.05.2017 DE 102017208823
(43) Veröffentlichungstag der Anmeldung: 08.04.2020
(73) Patentinhaber: Wago Verwaltungsgesellschaft mbH, 32423 Minden (DE)
(72) Erfinder: JEROLM, Daniel, 49152 Bad Essen (DE)
(74) Vertreter: Daum, Patrick
(86) Internationale Anmeldenummer: PCT/EP2018/062925
(87) Internationale Veröffentlichungsnummer: WO 2018/215290

(56) Entgegenhaltungen:
- EP-A1- 1 431 714
- EP-A2- 1 193 916
- DE-A1- 19 545 566

## Beschreibung

### 1. Gebiet der Erfindung

Die Erfindung betrifft im Allgemeinen die Initialisierung eines Lokalbusses, insbesondere die Informationsabfrage in einem Lokalbus mittels relativer Adressierung.

### 2. Stand der Technik

Bussysteme und insbesondere Lokalbussysteme sind aus heutigen Automatisierungsanlagen kaum noch wegzudenken. Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt *(engl.* Header) oder angehängt *(engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Datenvorangestellt oder angefügt werden können. Die an einen Lokalbus angeschlossenen Lokalbusteilnehmer können auch als Datenbusteilnehmer bezeichnet werden, weil diese Daten auf dem Lokalbus austauschen. Ein Datenbusteilnehmer kann dabei zum Steuern oder Überwachen eines Prozesses dienen, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Prozessdaten für den Lokalbus um oder umgekehrt. Die Datenbusteilnehmer können auch als Lokalbusteilnehmer bezeichnet werden.

Ein Ringbus ist dabei eine spezialisierte Form des Lokalbusses, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Die auf dem Lokalbus übertragenen Daten können auch als Lokalbusdaten bezeichnet werden. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

Zum Senden an spezifische Datenbusteilnehmer werden Datenpakete mit einer dem Datenbusteilnehmer entsprechenden Adresse versehen, so dass der Datenbusteilnehmer, der die entsprechende Adresse aufweist Kenntnis darüber bekommt, dass das Datenpaket an diesen Datenbusteilnehmer gerichtet ist. Im Stand der Technik werden bei Ringbussen häufig die Datenbusteilnehmer entsprechend ihrer physikalischen Reihenfolge im Ringbus adressiert, wie zum Beispiel in DE 195 45 566 A1 beschrieben. Dies macht aber die Selbstverwaltung des Ringbusses sehr unflexibel und statisch, insbesondere wenn neue Datenbusteilnehmer in den Ringbus eingefügt werden oder alte ersetzt werden.

Aufgabe der vorliegenden Erfindung ist es daher Verfahren und Vorrichtungen bereitzustellen, mit denen auch beim Tausch von Datenbusteilnehmern oder beim Initialisieren des Lokalbusses eine flexible Adressierung möglich ist und mit denen auch auf einfache Weise Informationen über die entsprechenden Datenbusteilnehmer gesammelt werden können.

### 3. Zusammenfassung der Erfindung

Diese Aufgabe wird mit den Verfahren und den Vorrichtungen der unabhängigen Ansprüche gelöst. Vorteilhafte Ausführungsformen sind in den Unteransprüchen beschrieben.

Das erfindungsgemäße Verfahren zur Kommunikation mit Datenbusteilnehmern verbunden mit einem Lokalbus, insbesondere einem Ringbus, mit einem Lokalbusmaster weist auf, Senden eines ersten Datenpakets von dem Lokalbusmaster an alle Datenbusteilnehmer zum Abzählen von kommunikationsbereiten Datenbusteilnehmer in einer Reihenfolge, wobei das erste Datenpaket einen ersten Zählerwert aufweist, der von jedem der kommunikationsbereiten Datenbusteilnehmer in der Reihenfolge geändert wird. Dabei kann der erste Zählerwert beispielsweise ein Binärwert sein. Mit anderen Worten, mit einem ersten einzelnen Datenpaket wird die Anzahl der bereits kommunikationsbereiten Datenbusteilnehmer bestimmt. In dieser Kommunikationsphase ist keine Adressierung der Datenbusteilnehmer nötig. Das erste Datenpaket zum Abzählen kann beispielsweise in einem Zyklusrahmen, auf den Lokalbus gesendet werden.

Ein Zyklusrahmen kann dabei beispielsweise als ein wiederkehrendes (zyklisches) vorzugsweise äquidistantes Zeitintervall, in dem Daten auf dem Lokalbus übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Datenpakete vorgesehen. Die Startkennung (SOC) und die Datenpakete werden über den Lokalbus übertragen und durchlaufen alle Datenbusteilnehmer. Die Startkennung (SOC) ist separat, also als eigenständiges Symbol übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Lokalbus. Das Signal ermöglicht es den Datenbusteilnehmern, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

Jeder bereits kommunikationsbereite Datenbusteilnehmer kann bei Empfang des einzelnen Datenpakets, den im Datenpaket enthaltenen ersten Zählerwert ändern, beispielsweise diesen inkrementieren oder dekrementieren, bevor das Datenpaket beziehungsweise der den Zählerwert enthaltende Teil des Datenpakets an den nächsten Datenbusteilnehmer weiter gesendet wird. Noch nicht kommunikationsbereite Datenbusteilnehmer leiten das Datenpaket nur durch ohne den ersten Zählerwert zu ändern. Ein Datenbusteilnehmer kann dabei kommunikationsbereit sein, wenn dieser taktsynchronisiert ist mit dem Lokalbus und Datenpakete empfangen kann und diese weiterleiten kann und in der Lage ist, Verarbeitungen mit den Datenpaketen durchzuführen. Handelt es sich bei dem Lokalbus um einen Ringbus, so wird das Datenpaket vom letzten Datenbusteilnehmer, egal ob dieser bereits kommunikationsbereit ist oder nicht an den Lokalbusmaster zurück geleitet. Alternativ kann der Ringbus auch durch eine Brückeneinheit geschlossen werden, die die Datenpakete, die in Abwärtsrichtung empfangen werden wieder in Aufwärtsrichtung sendet. Dies geschieht entweder erneut durch alle Datenbusteilnehmer hindurch, so dass diese erneut eine Verarbeitung durchführen können, oder vorbei an allen Datenbusteilnehmern über eine Bypassverbindung. Anhand des ersten Zählerwertes weiß der Lokalbusmaster anschließend, wie viele Datenbusteilnehmer des Lokalbusses bereits kommunikationsbereit sind. Zur Informationsabfrage erzeugt der Lokalbusmaster anschließend eine Anzahl von zweiten Datenpaketen. Dabei entspricht die Anzahl der zweiten Datenpakete der Anzahl von durch den ersten Zählerwert angezeigten kommunikationsbereiten Datenbusteilnehmern. Hat der erste Zählerwert beispielsweise angezeigt, dass es N kommunikationsbereite Datenbusteilnehmer gibt, so werden auch N zweite Datenpakete erzeugt und auf dem Lokalbus gesendet, wobei N eine natürliche ganze Zahl ist. Anschließend wird die Anzahl von zweiten Datenpaketen von dem Lokalbusmaster auf den Lokalbus gesendet. Jeweils eins der erzeugten zweiten Datenpakete ist für einen kommunikationsbereiten Datenbusteilnehmer bestimmt und ist diesem basierend auf der jeweiligen relativen Position des kommunikationsbereiten Datenbusteilnehmers innerhalb der Reihenfolge zugewiesen. Mit anderen Worten, die kommunikationsbereiten Datenbusteilnehmer haben in einer bestimmten Reihenfolge den ersten Zählerwert des ersten Datenpakets geändert. Die Anzahl von zweiten Datenpaketen werden vorzugsweise in einer Reihenfolge auf den Lokalbus gesendet, die der Reihenfolge des Änderns des ersten Zählerwertes entspricht. Diese zweiten Datenpakete können dann dazu verwendet werden die jeweiligen Datenbusteilnehmer anzusprechen, ohne dass deren Adresse bekannt ist. D.h. mit Hilfe des ersten Datenpakets wird die relative Position der kommunikationsbereiten Datenbusteilnehmer im Lokalbus bestimmt und diese relative Position wird anschließend verwendet, um die kommunikationsbereiten Datenbusteilnehmer zu adressieren beziehungsweise diesen zweite Datenpakete zuzuweisen und zu senden. Durch die Verwendung der relativen Position der Datenbusteilnehmer, die nicht abhängt von der physikalischen Position des Datenbusteilnehmers, sondern von dessen Kommunikationsbereitschaft, ist eine flexible Kommunikation und Informationssammlung möglich. Jedes Datenpaket der Anzahl von zweiten Datenpaketen ist dabei genau einem Datenbusteilnehmer zugewiesen, der dieses zweite Datenpaket, zur Informationsweitergabe an den Lokalbusmaster verwendet. Der Lokalbusmaster adressiert die Datenbusteilnehmer dementsprechend in dieser Phase der Kommunikation der Reihe nach und zwar in der Reihenfolge in der die Datenbusteilnehmer den ersten Zählerwert des ersten Datenpakets geändert haben.

Die hier beschriebenen auf dem Lokalbus übertragenen Datenpakete können auch als Telegramme bezeichnet werden. Die Datenpakete können auch als Kommunikationsdatenpakete bezeichnet werden, die insbesondere zum Programmieren und/oder zum Steuern und/oder zum Überwachen und/oder zum Identifizieren zumindest eines Datenbusteilnehmers dienen.

Die Datenbusteilnehmer dienen zum Steuern oder Überwachen eines Prozesses, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Daten für den Lokalbus um oder umgekehrt.

In einer bevorzugten Ausführungsform des erfindungsgemäßen Verfahrens ist das einzelne für die erste Zählung verwendete Datenpaket vom gleichen Typ, wie die Anzahl von zweiten Datenpaketen, die entsprechend der Anzahl des ersten Zählerwertes vom Lokalbusmsster erzeugt werden und auf den Lokalbus gesendet werden.

In einer bevorzugten Ausführungsform des erfindungsgemäßen Verfahrens weist jedes Datenpaket der Anzahl von zweiten Datenpaketen einen zweiten Zählerwert zur Zuweisung des Datenpakets auf, wobei sich der zweite Zählerwert in jedem der zweiten Datenpakete unterscheidet also einen unterschiedlichen Startwert hat. Dieser zweite Zählerwert wird verwendet zur relativen Adressierung der Datenbusteilnehmer. Erkennt ein Datenbusteilnehmer, dass ein zweiter Zählerwert eines Datenpakets, der für die relative Adressierung verwendet wird, einem bestimmten Referenzwert entspricht, so erkennt dieser Datenbusteilnehmer, dass das diesen zweiten Zählerwert tragende Datenpaket für den Datenbusteilnehmer bestimmt ist. Bei der relativen Adressierung ändert jeder Datenbusteilnehmer den zweiten Zählerwert jedes von der Anzahl von zweiten Datenpaketen. Das Ändern kann dabei ein Inkrementieren oder Dekrementieren des zweiten Zählerwertes sein. Der Lokalbusmaster kann dabei angepasst sein, den zweiten Zählerwert entsprechend der Anzahl der gezählten Datenbusteilnehmer, also dem ersten Zählerwert derart anzupassen, dass sich jeder zweite Zählerwert unterscheidet. Außerdem wird jeder zweite Zählerwert derart angepasst, dass durch die Änderung des zweiten Zählerwertes durch die Datenbusteilnehmer, der zweite Zählerwert bei nur genau einem kommunikationsbereiten Datenbusteilnehmer einen Referenzwert erreicht. Der Referenzwert kann dabei beispielsweise in allen Datenbusteilnehmern der gleiche Referenzwert sein, so dass sich entsprechend der zweite Zählerwert von jedem Datenpaket unterscheidet. Erreicht der zweite Zählerwert eines Datenpakets den Referenzwert an einem kommunikationsbereiten Datenbusteilnehmer, so weiß dieser Datenbusteilnehmer, dass das Datenpaket für diesen Datenbusteilnehmer bestimmt ist. Hierzu kann jeder Datenbusteilnehmer dazu ausgelegt sein, einen Vergleich zwischen dem zweiten Zählerwert in jedem Datenpaket von der Anzahl von zweiten Datenpaketen und einem Referenzwert durchzuführen. Beispielsweise kann der zweite Zählerwert durch eine Binärdarstellung wiedergegeben werden. Beispielsweise kann das als erstes gesendete Datenpaket von der Anzahl von zweiten Datenpaketen einen zweiten Zählerwert aufweisen, der der höchsten Binärdarstellung des möglichen Wertebereiches für den zweiten Zählerwert entspricht. D.h. das als erstes gesendete Datenpaket von der Anzahl von zweiten Datenpaketen weist im zweiten Zählerwert nur Einsen auf. Der Wertebereich kann dabei abhängig sein von der maximalen Anzahl an Datenbusteilnehmern, die an den Lokalbus angeschlossen werden können. Inkrementiert der erste Datenbusteilnehmer den zweiten Zählerwert des als erstes gesendeten Datenpakets von der Anzahl von zweiten Datenpaketen, so erfährt dieser einen Nulldurchgang, d.h. die Binärdarstellung weist nur Nullen auf. Alternativ kann der Referenzwert auch ein Nulldurchgang von einer Anzahl von Signifikaten letzten Bits sein. Wenn der Referenzwert des ersten Datenbusteilnehmers Null ist, erkennt der erste Datenbusteilnehmer in dem hier genannten Beispiel, dass das Datenpaket an den ersten Datenbusteilnehmer gerichtet ist, d.h. diesem zugewiesen ist. Das als zweites auf den Lokalbus gesendete Datenpaket von der Anzahl von zweiten Datenpaketen kann für den zweiten Datenbusteilnehmer bestimmt sein, d.h. an diesen gerichtet sein. In diesem Datenpaket kann der Lokalbusmaster den zweiten Zählerwert auf einen Wert setzen, der durch zwei Datenbusteilnehmer inkrementiert werden kann, bevor dieser einen Nulldurchgang verzeichnet. Das als zweites gesendete Datenpaket von der Anzahl von zweiten Datenpaketen kann also vom ersten Datenbusteilnehmer inkrementiert werden und wird von diesem auf die höchste Binärdarstellung inkrementiert, d.h. auf einen Wert der nur Einsen aufweist. Da aber kein Nulldurchgang verzeichnet wurde, weiß der erste Datenbusteilnehmer, dass das Datenpaket nicht für den ersten Datenbusteilnehmer bestimmt ist und sendet es weiter auf dem Lokalbus an den nächsten kommunikationsbereiten Datenbusteilnehmer. Dieser inkrementiert noch einmal den bereits einmal inkrementierten zweiten Zählerwert. Hierbei wird ein Nulldurchgang erfahren, so dass der zweite kommunikationsbereite Datenbusteilnehmer weiß, dass dieses Datenpaket für den zweiten Datenbusteilnehmer bestimmt ist. Auf diese Weise kann der Lokalbusmaster alle Datenpakete der Anzahl von zweiten Datenpaketen über den zweiten Zählerwert und dessen Erreichen eines Referenzwertes den jeweiligen kommunikationsbereiten Datenbusteilnehmern zuweisen beziehungsweise an die jeweiligen Datenbusteilnehmer adressieren bzw. richten. Dabei ist dem Fachmann klar, dass auch wenn hier das Inkrementieren beschrieben ist und als Referenzwert ein Nulldurchgang angenommen wird, dies auch über ein Dekrementieren und einen Einsdurchgang bewerkstelligt werden kann. D.h. der zweite Zählerwert des als erstes gesendeten Datenpakets wird auf Null gesetzt. Wird dieser dekrementiert, so springt der Zählerwert auf nur Einsen. Das als zweites gesendete Datenpaket von der Anzahl von Datenpaketen enthält dann entsprechend als Startwert für den zweiten Zählerwert eine Eins etc. Des Weiteren ist dem Fachmann bewusst, dass auch andere Abzählmechanismen verwendet werden können, und der zweite Zählerwert entsprechend eingerichtet werden kann, um diesen Abzählmechanismen zu entsprechen. Der Zählerwert kann bei den Abzählmechanismen vorzugsweise eingerichtet sein nur genau einmal einen Referenzwert anzunehmen, so dass sich eine eineindeutige Zuweisung der Datenpakete ergibt. Beispielsweise kann auch erst ein Vergleich mit dem Referenzwert und anschließend das Inkrementieren /Dekrementieren stattfinden.

Wenn ein Datenbusteilnehmer erkennt, dass ein Datenpaket an den Datenbusteilnehmer gerichtet ist, weil der zweite Zählerwert in diesem Datenpaket einen Referenzwert erreicht hat, der einem im Datenbusteilnehmer gespeicherten Referenzwert entspricht, so kann der Datenbusteilnehmer in dem Datenbusteilnehmer gespeicherte Informationen in ein Feld des Datenpakets schreiben, welches an den Datenbusteilnehmer gerichtet ist. Beispielsweise kann der Datenbusteilnehmer seine Adresse in das Feld schreiben. Auf diese Weise kann der Lokalbusmaster Informationen über die Datenbusteilnehmer sammeln.

In einer bevorzugten Ausführungsform des erfindungsgemäßen Verfahrens weist dieses auf Vergleichen des ersten Zählerwertes und des zweiten Zählerwertes zumindest eines Datenpakets von der Anzahl von Datenpaketen an dem Lokalbusmaster, nach der Durchleitung durch den Lokalbus, also nachdem das zumindest eine Datenpaket verarbeitet wurde durch jeden kommunikationsbereiten Datenbusteilnehmer. Sind zwischen dem ersten Zählen und der Rückkehr der Datenpakete am Lokalbusmaster keine weiteren Datenbusteilnehmer kommunikationsbereit geworden, so gibt es eine definierte Beziehung zwischen dem ersten Zählerwert und dem zweiten Zählerwert. Beispielsweise ist der zweite Zählerwert des ersten Datenpakets von der Anzahl von zweiten Datenpaketen gleich dem ersten Zählerwert minus eins und der zweite Zählerwert des letzten Datenpakets von der Anzahl von zweiten Datenpaketen ist gleich dem Referenzwert, beispielsweise gleich Null. Dies ist bedingt durch die Anpassung des zweiten Zählerwertes an die Anzahl von durch den ersten Zählerwert abgezählten Datenbusteilnehmern. Der zweite Zählerwert jedes Datenpakets von der Anzahl von zweiten Datenpaketen wird dann entsprechend der Anzahl von Datenbusteilnehmern genau einmal von jedem Datenbusteilnehmer geändert, also der Anzahl angezeigt durch den ersten Zählerwert. Sind während des ersten Abzählens mit Hilfe des ersten Zählerwertes und dem Senden der Anzahl von zweiten Datenpaketen neue Datenbusteilnehmer kommunikationsbereit geworden, so kann der Lokalbusmaster keine feste Beziehung zwischen dem ersten und dem zweiten Zählerwert erkennen. In diesem Fall sendet der Lokalbusmaster erneut ein einzelnes erstes Datenpaket mit einem ersten Zählerwert an die Datenbusteilnehmer, der Lokalbusmaster zählt in diesem Fall also erneut die kommunikationsbereiten Datenbusteilnehmer ab. Anschließend kann beispielsweise der neue Zählerwert mit dem alten Zählerwert verglichen werden. Wenn diese übereinstimmen, dann kann festgestellt werden, dass es einen Fehler in der Übertragung gab, oder ein Datenbusteilnehmer obwohl dieser Kommunikationsbereitschaft signalisiert hat, durch die Verarbeitung des ersten Datenpakets mit dem ersten Zählerwert, dieser aber nicht in der Lage ist die Anzahl von zweiten Datenpaketen zu Verarbeiten. Weicht der neue erste Zählerwert ab vom alten Zählerwert, so ist zumindest ein weiterer Datenbusteilnehmer kommunikationsbereit geworden. In diesem Fall sendet der Lokalbusmaster erneut die Anzahl von zweiten Datenpaketen, wobei die Anzahl angepasst ist an den neuen ersten Zählerwert und die zweiten Zählerwerte der Anzahl von zweiten Datenpaketen sind auch angepasst an den neuen ersten Zählerwert. Dieses Verfahren wird so lange wiederholt, bis der Vergleich zeigt, dass keine weiteren Datenbusteilnehmer zwischenzeitlich kommunikationsbereit geworden sind.

In einer bevorzugten Ausführungsform des erfindungsgemäßen Verfahrens sendet der Lokalbusmaster in gewissen zeitlichen Abständen einzelne erste Datenpakete mit einem ersten Zählerwert aus, um die Anzahl der am Lokalbus angeschlossenen Datenbusteilnehmer zu überprüfen.

In einer bevorzugten Ausführungsform des erfindungsgemäßen Verfahrens sendet der Lokalbusmaster nach Erhalt der Anzahl von zweiten Datenpaketen erneut ein Datenpaket mit einem ersten Zählerwert, um zu überprüfen, ob in der Zwischenzeit keine weiteren Datenbusteilnehmer kommunikationsbereit geworden sind. D.h. der Lokalbusmaster verifiziert die Daten erhalten in der Anzahl von zweiten Datenpaketen.

Die oben genannte Aufgabe wird auch gelöst durch einen Lokalbusmaster eines Lokalbusses, insbesondere eines Ringbusses, mit Datenbusteilnehmern. Der Lokalbusmaster weist dabei ein Mittel zum Senden eines ersten Datenpakets an alle Datenbusteilnehmer auf, wobei das erste Datenpaket verwendet wird zum Abzählen der kommunikationsbereiten Datenbusteilnehmer in einer Reihenfolge. Dabei kann das erste Datenpaket einen ersten Zählerwert aufweisen, der von jedem kommunikationsbereiten Datenbusteilnehmer in der Reihenfolge geändert wird. Der Lokalbusmaster kann nach dem Empfang des ersten Datenpakets dann anhand des ersten Zählerwertes des Datenpakets bestimmen, wie viele Datenbusteilnehmer bereits kommunikationsbereit sind. Des Weiteren weist der Lokalbusmaster ein Mittel zum Senden einer Anzahl von zweiten Datenpaketen auf, wobei deren Anzahl basiert auf dem ersten Zählerwert. Jedes der zweiten Datenpakete ist basierend auf der jeweiligen relativen Position der kommunikationsbereiten Datenbusteilnehmer in der Reihenfolge diesen zugewiesen, wobei die Zuweisung anhand eines zweiten Zählerwertes geschehen kann. Das Mittel zum Senden kann dabei eine Senderschaltung oder eine Transceiverschaltung sein. Die Schaltungen können in einem anwendungsspezifischen integrierten Schaltkreis *(engl.* ASIC) oder in einer Feld programmierbaren (Logik-)Gatter-Anordnung *(engl.* FPGA) implementiert sein.

Die oben genannte Aufgabe wird auch gelöst durch ein Verfahren zur Kommunikation mit einem Lokalbusmaster eines Lokalbusses, insbesondere eines Ringbusses, mit kommunikationsbereiten Datenbusteilnehmern. Das Verfahren weist auf Empfangen an einem kommunikationsbereiten Datenbusteilnehmer ein erstes Datenpaket von einem Lokalbusmaster, wobei das erste Datenpaket einen ersten Zählerwert aufweist, Ändern des ersten Zählerwertes in dem Datenpaket durch den kommunikationsbereiten Datenbusteilnehmer, Empfangen einer Anzahl von zweiten Datenpaketen, wobei jedes der zweiten Datenpakete einen zweiten Zählerwert aufweist. Des Weiteren weist das Verfahren auf Schreiben einer in dem kommunikationsbereiten Datenbusteilnehmer gespeicherten Information, beispielsweise einer Adresse, in ein Feld eines Datenpakets von der Anzahl von zweiten Datenpakete, welches dem kommunikationsbereiten Datenbusteilnehmer zugewiesen ist. Dabei kann der Datenbusteilnehmer erkennen, dass diesem ein Datenpaket aus der Anzahl von zweiten Datenpaketen zugewiesen ist, wenn der Datenbusteilnehmer den zweiten Zählerwert des Datenpakets ändert und dieser dann einen Referenzwert erreicht. Der zweite Zählerwert der Anzahl von zweiten Datenpaketen ist dabei in jedem Datenpaket unterschiedlich, so dass der Referenzwert nur genau einmal erreicht wird, wenn alle kommunikationsbereiten Datenbusteilnehmer den zweiten Zählerwert eines Datenpakets von der Anzahl von zweiten Datenpaketen ändern.

Die oben genannte Aufgabe wird auch gelöst durch einen kommunikationsbereiten Datenbusteilnehmer eines Lokalbusses, insbesondere eines Ringbusses, mit einem Lokalbusmaster. Der kommunikationsbereite Datenbusteilnehmer weist auf ein Mittel zum Empfangen eines ersten Datenpakets von einem Lokalbusmaster, wobei das erste Datenpaket einen ersten Zählerwert aufweist, ein Mittel zum Ändern des ersten Zählerwertes in dem ersten Datenpaket, ein Mittel zum Empfangen einer Anzahl von zweiten Datenpaketen, und ein Mittel zum Schreiben einer in dem kommunikationsbereiten Datenbusteilnehmer gespeicherten Information, beispielsweise einer Adresse, in ein Feld eines Datenpakets von der Anzahl von zweiten Datenpaketen, welches an den kommunikationsbereiten Datenbusteilnehmer zugewiesen ist.

Die oben genannte Aufgabe wird auch gelöst durch ein Lokalbussystem bestehend aus einem Lokalbusmaster und zumindest einem Datenbusteilnehmer.

Der Lokalbusmaster weist ein Mittel zum Senden eines ersten Datenpakets an alle Datenbusteilnehmer auf, wobei das erste Datenpaket verwendet wird zum Abzählen der kommunikationsbereiten Datenbusteilnehmer in einer Reihenfolge. Dabei kann das erste Datenpaket einen ersten Zählerwert aufweisen, der von jedem kommunikationsbereiten Datenbusteilnehmer in der Reihenfolge geändert wird. Der Lokalbusmaster kann des Weiteren ein Mittel zum Empfangen des ersten Datenpakets mit dem durch jeden kommunikationsbereiten Datenbusteilnehmer geänderten ersten Zählerwert aufweisen. Der Lokalbusmaster kann nach dem Empfang des ersten Datenpakets dann anhand des ersten Zählerwertes des Datenpakets bestimmen, wie viele Datenbusteilnehmer bereits kommunikationsbereit sind. Des Weiteren weist der Lokalbusmaster ein Mittel zum Senden einer Anzahl von zweiten Datenpaketen auf, wobei deren Anzahl basiert auf dem ersten Zählerwert. Jedes der zweiten Datenpakete ist basierend auf der jeweiligen relativen Position der kommunikationsbereiten Datenbusteilnehmer in der Reihenfolge diesen zugewiesen, wobei die Zuweisung anhand des zweiten Zählerwertes geschieht. Die Zuweisung kann dabei dadurch bewerkstelligt werden, dass jedem zweiten Datenpaket ein anderer Startwert für den zweiten Zählerwert gegeben wird.

Der kommunikationsbereite Datenbusteilnehmer weist ein Mittel zum Empfangen des einzelnen ersten Datenpakets von einem Lokalbusmaster auf, wobei das erste Datenpaket den ersten Zählerwert aufweist, ein Mittel zum Ändern des ersten Zählerwertes in dem ersten Datenpaket, ein Mittel zum Empfangen der Anzahl von zweiten Datenpaketen und ein Mittel zum Schreiben einer in dem kommunikationsbereiten Datenbusteilnehmer gespeicherten Information, beispielsweise einer Adresse, in ein Feld eines Datenpakets von der Anzahl von zweiten Datenpaketen, welches an den kommunikationsbereiten Datenbusteilnehmer zugewiesen ist.

Der Lokalbusmaster kann ein Mittel zum Empfangen der durch die kommunikationsbereiten Datenbusteilnehmer geänderten zweiten Datenpakete aufweisen und kann die von den kommunikationsbereiten Datenbusteilnehmern in die zweiten Datenpakete geschriebenen Daten auslesen.

Die oben genannte Aufgabe wird auch gelöst durch ein computerlesbares Medium beinhaltend Code, der bewirkt, dass ein Computer eins der hierin beschriebenen Verfahren ausführt. Der Code kann dabei im Lokalbusmaster gespeichert sein und/oder im Datenbusteilnehmer. In einer bevorzugten Ausführungsform ist der Code gespeichert in einem Firmwarespeicher des Lokalbusmasters beziehungsweise in einem von den Datenbusteilnehmer zugreifbaren Speicher.

### 4. Kurze Beschreibung der Zeichnungen

Die Erfindung wird nachfolgend anhand von Ausführungsbeispielen mit den beigefügten Zeichnungen näher erläutert. Aus dem beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung, einem übergeordneten Bus, und mehreren beispielhaften erfindungsgemäßen Datenbusteilnehmern;
- Fig. 2: ein exemplarisches Datenpaket mit einem ersten und zweiten Zählerwert;
- Fig. 3: das Senden eines einzelnen Datenpakets durch die in Figur 1 gezeigten Datenbusteilnehmer zum Abzählen der Datenbusteilnehmer;
- Fig. 4: das Senden einer Anzahl von Datenpaketen durch die in Figur 1 gezeigten Datenbusteilnehmer zur Informationsabfrage der Datenbusteilnehmer;
- Fig. 5a/b: das Senden einer Anzahl von Datenpaketen durch die in Figur 1 gezeigten Datenbusteilnehmer mit einem zusätzlichen kommunikationsbereiten Datenbusteilnehmer;
- Fig. 6: das erneute Senden eines einzelnen Datenpakets durch die in Figur 1 gezeigten Datenbusteilnehmer zum Abzählen der Datenbusteilnehmer; und
- Fig. 7a/b: das erneute Senden einer Anzahl von Datenpaketen durch die in Figur 1 gezeigten Datenbusteilnehmer zur Informationsabfrage der Datenbusteilnehmer.

### 5. Beschreibung bevorzugter Ausführungsbeispiele

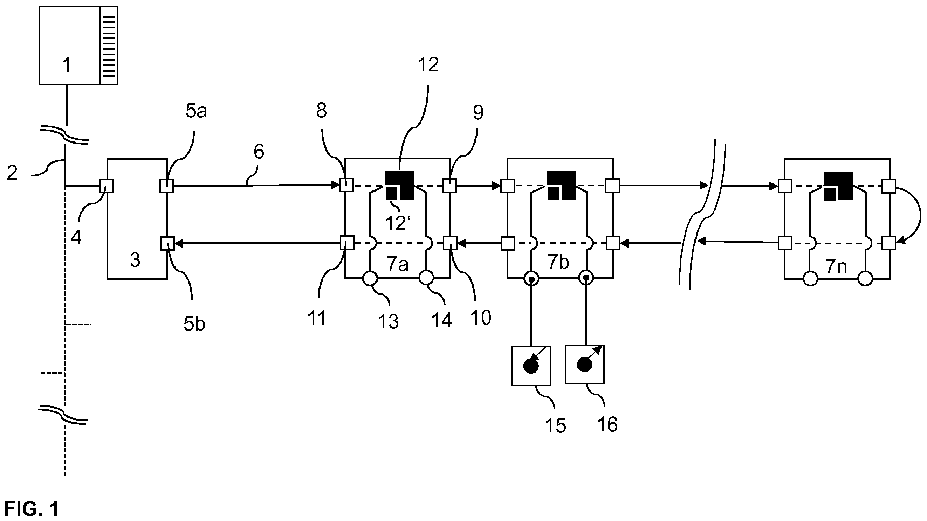

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerks über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. An den Lokalbus sind Datenbusteilnehmer 7a, 7b, ..., 7n angeschlossen bzw. bilden diesen. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel die Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten und/oder zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 ― der auch einen Datenbusteilnehmer des Ringbusses 6 darstellt ― auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder auch optische Verbindung mittels entsprechender Komponenten herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b, ..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

Des Weiteren weisen die Datenbusteilnehmer 7a, 7b, ..., 7n in dem in Figur 1 gezeigten Ausführungsbeispiel auch eine Verarbeitungseinheit 12 auf, die beispielsweise aus einer Verarbeitungskomponente und einer Logikeinheit besteht. Die Verarbeitungseinheit 12 kann auch als Gesamtschaltung des Datenbusteilnehmers bezeichnet werden. D.h. die Verarbeitungseinheit 12 empfängt Daten über die Eingänge 8 und 10 und gibt Daten auf den Ausgängen 9 und 11 aus. Des Weiteren kann die Verarbeitungseinheit 12 Daten von den Ein-/und Ausgängen 13 und 14 empfangen beziehungsweise ausgeben. Weiterhin hat die Verarbeitungseinheit 12 Zugriff auf einen Speicher 12' des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sein und die Datenbusteilnehmer 7a, 7b, ..., 7n auf diese Moduleinheit aufgesteckt werden können. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, die Kommunikation zwischen den restlichen Datenbusteilnehmern 7a, 7b, ..., 7n nicht unterbrochen wird, weil die Kommunikation über die noch vorhandenen Moduleinheiten geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Der in dem hier gezeigten Ausführungsbeispiel gezeigte Ringbus 6 basiert auf einer Zyklusrahmenkommunikation.

Jedes Datenpaket wird von dem Lokalbusmaster 3 in Abwärtsrichtung an den ersten Datenbusteilnehmer 7a des Ringbusses 6 gesendet. Dieser empfängt einen ersten Teil des Datenpakets über die Schnittstelle 8. Ein derartiger Teil des Datenpakets wird im Folgenden auch als Stück oder Einheit bezeichnet. Der Datenbusteilnehmer 7a führt dann eine Verarbeitung des Teils aus, und leitet den Teil dann an den nächsten Datenbusteilnehmer 7b über Schnittstelle 9 weiter, vorzugsweise gleichzeitig empfängt der erste Datenbusteilnehmer 7a einen zweiten Teil des Datenpakets usw. Die Größe der Teile des Datenpakets, also die Stückelung des Datenpakets, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Datenpakets am Datenbusteilnehmer 7a, 7b, ..., 7n vorliegen.

Das Datenpaket durchläuft dementsprechend einheitenweise, stückchenweise, oder Teile weise, zum Beispiel in Teilen oder Symbolen von 8 Bits, die Datenbusteilnehmer 7a, 7b, ..., 7n. Der Teil des Datenpakets, welches vom letzten Datenbusteilnehmer, in dem hier gezeigten Ausführungsbeispiel Datenbusteilnehmer 7n, verarbeitet worden ist, durchläuft dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 10 verbindet oder an den letzten Datenbusteilnehmer 7n wird eine schaltbare Brücke ― hier nicht gezeigt ― angeschlossen, die die Funktion übernimmt die Teile des Datenpakets von der Schnittstelle 9 auf die Schnittstelle 10 zu leiten. Alternativ kann die Schnittstelle 10 des Datenbusteilnehmers 7n auch mit Hilfe einer Bypassleitung ― hier nicht gezeigt ― direkt mit der Schnittstelle 5b des Lokalbusmasters 3 verbunden werden.

In der Aufwärtsrichtung können die Einheiten des Datenpakets beziehungsweise der Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Einheiten des Datenpakets stattfindet, so dass das Datenpaket zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Bevor jedoch Datenpakete auf dem Lokalbus 6 gesendet werden können die Prozessdaten tragen, muss der Lokalbus 6 initialisiert werden.. D.h. der Lokalbusmaster 3 muss Kenntnis darüber erlangen, welche Datenbusteilnehmer 7a, 7b, ..., 7n vorhanden sind und von diesen Informationen abfragen können. Wenn der Lokalbus 6 dazu ausgelegt ist, dass die Datenbusteilnehmer 7a, 7b, ..., 7n auch während des Betriebes gewechselt werden können, was als Hot-Swap bezeichnet wird, so muss der Lokalbusmaster 3 auch in der Lage sein während des Betriebes die neuen Datenbusteilnehmer zu erkennen und von diesen Informationen abzufragen.

Erfindungsgemäß verwendet der Lokalbusmaster 3 für diese anfängliche Initialisierung oder für die Zwischeninitialisierung ein erstes Datenpaket und eine Anzahl von zweiten Datenpaketen. Das erste Datenpalet wird nicht adressiert auf den Lokalbus 6 gesendet und durchläuft alle Datenbusteilnehmer 7a, 7b, ..., 7n. Die Anzahl von zweiten Datenpaketen wird dann anschließend auf dem Lokalbus 6 gesendet und durchläuft ebenfalls alle Datenbusteilnehmer 7a, 7b, ..., 7n Das erste Datenpaket und die Anzahl von zweiten Datenpaketen sind dabei vom gleichen Typ. Ein entsprechendes

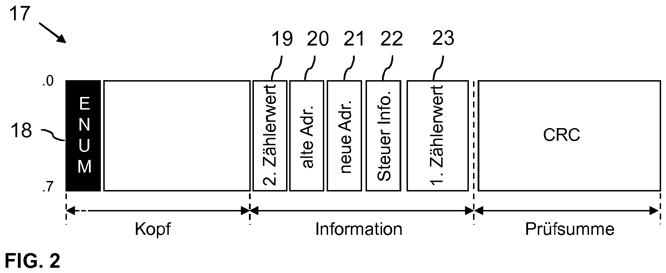

Datenpaket ist exemplarisch in Figur 2 gezeigt.

Das in Figur 2 exemplarisch gezeigte Datenpaket 17 besteht aus einem allgemeinen Kopfteil ― der auch Header genannt werden kann ―, einem Informationsteil ― der auch Payload bezeichnet werden kann ― sowie einem Prüfsummenteil ― der auch Prüfsumme bezeichnet werden kann.

Der Kopfteil beinhaltet ein Feld 18, welches ein eindeutiges nur einmal auftretendes Bitmuster ENUM enthält, welches auch als Codewort oder Kennung bezeichnet werden kann. Die Anzahl und die Ausgestaltung von eindeutigen Bitmustern beziehungsweise Codewörtern hängen ab von der auf dem Lokalbus 6 verwendeten Kodierung. Alternativ oder zusätzlich können aber auch spezielle Bitmuster oder Codewörter in dem verwendeten Busprotokoll definiert werden. Es ist dabei nur von Bedeutung, dass die Datenbusteilnehmer 7a, 7b, ..., 7n eineindeutig aus dem Bitmuster beziehungsweise Codewort des Feldes 18 erkennen können, um welche Art von Datenpaket 17 es sich handelt. In dem hier gezeigten Ausführungsbeispiel haben die Datenbusteilnehmer 7a, 7b, ..., 7n Kenntnis darüber, dass wenn ein Feld 18 mit einem Bitmuster ENUM empfangen wird, es sich um ein Datenpaket 17 zur Initialisierung oder Zwischeninitialisierung handelt.

Der Kopfteil kann auch noch weitere Informationen beinhalten, die zur Steuerung oder Überprüfung des Datenpakets 17 und der darin enthaltenen Daten verwendet werden können. Dem Fachmann sind dabei eine Vielzahl von Feldern bekannt, die im Kopfteil enthalten sein können.

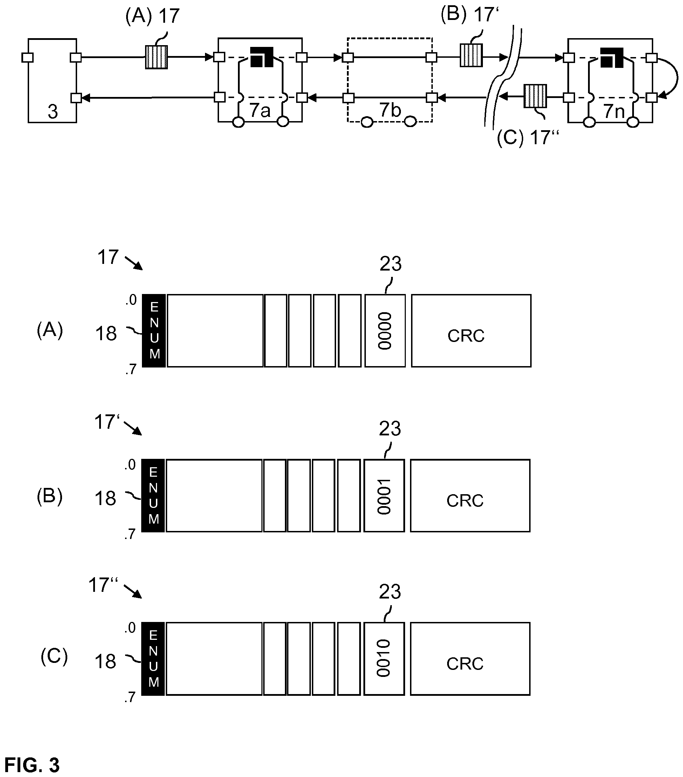

Der Informationsteil des Datenpakets 17 weist mehrere Felder auf, die zur Initialisierung sowie Zwischeninitialisierung verwendet werden können. Das Datenpaket 17 weist dabei einen ersten Zählerwert 23 und einen zweiten Zählerwert 19 auf. Der erste Zählerwert 23 wird dabei verwendet, um die Datenbusteilnehmer 7a, 7b, ..., 7n auf dem Lokalbus 6 abzuzählen. Dabei wird der erste Zählerwert 23 von jedem Datenbusteilnehmer 7a, 7b, ..., 7n der kommunikationsbereit ist, d.h. von jedem Datenbusteilnehmer 7a, 7b, ..., 7n, der das Datenpaket 17 beispielsweise verarbeiten kann, geändert. Dieses Ändern kann in einem inkrementieren oder dekrementieren des Wertes des ersten Zählerwertes 23 bestehen. Wenn das Datenpaket 17 den Lokalbus 6 durchlaufen hat, also wieder am Lokalbusmaster 3 angekommen ist, hat dieser Kenntnis darüber, wie viele kommunikationsbereite Datenbusteilnehmer 7a, 7b, ..., 7n am Lokalbus 6 angeschlossen sind. Des Weiteren weist das Datenpaket 17 auch einen zweiten Zählerwert 19 auf, der zur Zuweisung des Datenpakets 17 an die kommunikationsbereiten Datenbusteilnehmer 7a, b, ..., 7n dient, wie im Folgenden in Hinblick auf die Figuren 3 bis 7 näher erläutert wird.

Des Weiteren weist das Datenpaket ein Feld 20 auf, welches von den Datenbusteilnehmern 7a, 7b, ..., 7n verwendet werden kann, um ihre gespeicherte Adresse an den Lokalbusmaster 3 zu kommunizieren. Auch weist das Datenpaket 17 ein Feld 21 auf mit der der Lokalbusmaster 3 den Datenbusteilnehmern 7a, 7b, ..., 7n eine neue Adresse zuweisen kann. Des Weiteren kann das Datenpaket 17 auch noch ein weiteres Feld 22 aufweisen, welches Steuerinformation für die jeweiligen Datenbusteilnehmer 7a, 7b, ..., 7n tragen kann. Es ist dem Fachmann bewusst, dass auch wenn hier eine spezielle Reihenfolge und Anzahl der Felder 19 bis 23 vorgegeben ist, von dieser Anordnung und Anzahl der Felder abgewichen werden kann, ohne vom Gegenstand der Erfindung abzuweichen. Des Weiteren ist dem Fachmann bewusst, dass auch wenn hier nur exemplarisch die Abfrage der Adressinformation gezeigt ist, auch andere Informationen der Datenbusteilnehmer 7a, 7b, ..., 7n abgefragt werden können und dass hierzu entsprechende Felder im Datenpaket 17 enthalten sein können.

In dem hier gezeigten Ausführungsbeispiel ist das Datenpaket 17 in Symbole von jeweils 8 Bit eingeteilt. Das Datenpaket 17 wird auch in dieser Stückelung von den Datenbusteilnehmer 7a, 7b, ..., 7n empfangen und verarbeitet. D.h. als erstes sendet der Lokalbusmaster 3 das Symbol beziehungsweise Feld ENUM 18 an den ersten Datenbusteilnehmer 7a, nach einer vorher bestimmten Zeit, sendet der Lokalbusmaster 3 ein weiteres Symbol des Kopfteiles des Datenpakets 17 an den Datenbusteilnehmer 7a, dieser wiederum sendet gleichzeitig das Symbol beziehungsweise Feld ENUM 18 an den Datenbusteilnehmer 7b. In dieser Weise durchlaufen alle Teile des Datenpakets 17 die jeweiligen Datenbusteilnehmer 7a, 7b, ..., 7n, wobei zu jeder gegebenen Zeit jeder Datenbusteilnehmer 7a, 7b, ..., 7n immer nur ein Stück beziehungsweise Teil des Datenpakets 17 vorhält und damit verarbeiten kann.

Figur 3 zeigt exemplarisch die Initialisierung des Lokalbusses 6. In dem hier gezeigten Ausführungsbeispiel sind nur Datenbusteilnehmer 7a und 7n kommunikationsbereit. Datenbusteilnehmer 7b ist zwar am Lokalbus 6 vorhanden ist aber noch nicht kommunikationsbereit, was dadurch dargestellt ist, dass der Datenbusteilnehmer 7b den Abwärts- sowie Aufwärtsdatenstrom nur durchleitet. Zu einer gegebenen Zeit sendet der Lokalbusmaster 3 ein erstes Datenpaket 17 symbolweise an den kommunikationsbereiten Datenbusteilnehmer 7a. Dies ist mit dem ersten Datenpaket 17 an Position (A) des Lokalbusses 6 angedeutet. D.h. der Datenbusteilnehmer 7a empfängt zunächst das Feld 18 des ersten Datenpakets 17 mit dem eineindeutigen Bitmuster und hat Kenntnis darüber, dass nun eine Initialisierung stattfindet. Wenn dann das Feld 23 am Datenbusteilnehmer 7a empfangen wird, kann dieser eine Verarbeitung damit durchführen, nämlich den Wert dieses Feldes 23 ändern. In dem hier gezeigten Ausführungsbeispiel weist das Feld 23 einen Binärwert auf und der Datenbusteilnehmer 7a inkrementiert den Binärwert. In dem hier gezeigten Ausführungsbeispiel wurde der Wert des ersten Zählerwertes 23 vom Lokalbusmaster 3 auf 0000 gesetzt und der Datenbusteilnehmer 7a hat diesen Wert um einen inkrementiert auf 0001. D.h. dass nach dem Durchlauf durch den Datenbusteilnehmer 7a sich das Datenpaket von dem Datenpaket 17 unterscheidet, welches vom Lokalbusmaster 3 gesendet wurde. Dies ist in dem hier gezeigten Ausführungsbeispiel im weiteren mit der Kennzeichnung des Datenpakets als Datenpaket 17' gezeigt. Der Datenbusteilnehmer 7a selbst sendet auch symbolweise das Datenpaket 17' weiter an den nächsten Datenbusteilnehmer 7b. Da der Datenbusteilnehmer 7b noch nicht kommunikationsbereit ist, leitet dieser die Symbole des Datenpakets 17' direkt weiter an den nächsten Datenbusteilnehmer, in dem hier gezeigten Ausführungsbeispiel an den Datenbusteilnehmer 7n. Dies ist mit dem Datenpaket 17' an Position (B) des Lokalbusses 6 angedeutet. Das Datenpaket 17' wurde also von dem noch nicht kommunikationsbereiten Datenbusteilnehmer 7b nicht verarbeitet, d.h. der Wert des ersten Zählerwertes entspricht dem Wert auf den der Datenbusteilnehmer 7a diesen inkrementiert hat, nämlich 0001. Der Datenbusteilnehmer 7n empfängt dann das Datenpaket 17' und erkennt zunächst das eineindeutige Bitmuster 18. Wenn das Symbol mit dem ersten Zählerwert 23 von dem Datenbusteilnehmer 7n empfangen wird, so wird der erste Zählerwert 23 inkrementiert auf 0010, weil der Datenbusteilnehmer 7n bereits kommunikationsbereit ist. Der Datenbusteilnehmer 7n leitet das so veränderte Datenpaket 17" an den Lokalbusmaster 3 zurück. Dies ist mit dem Datenpaket 17" an Position (C) des Lokalbusses 6 angedeutet. Der Lokalbusmaster 3 kann dann den ersten Zählerwert 23 aus dem Datenpaket 17" auslesen und kann dadurch erfahren, wie viele kommunikationsbereite Datenbusteilnehmer 7a, 7n am Lokalbus 6 vorhanden sind. Dies rührt daher, da nur die kommunikationsbereiten Datenbusteilnehmer 7a, 7n den Zählerwert 23 ändern, die nicht kommunikationsbereiten Datenbusteilnehmer 7b diesen aber nicht ändern.

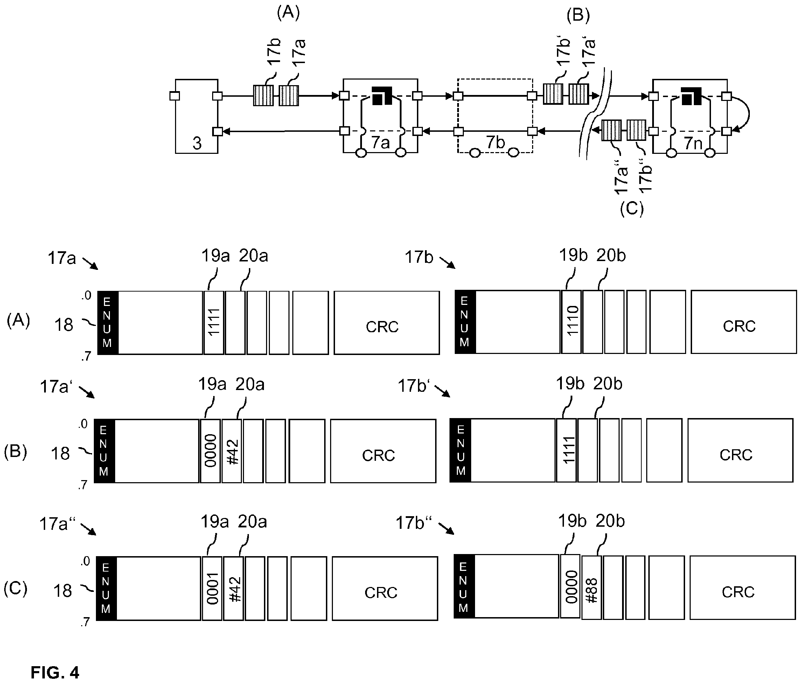

Anschließend erzeugt der Lokalbusmaster 3 Datenpakete 17 aber in der Anzahl der durch den ersten Zählerwert 23 angezeigten kommunikationsbereiten Datenbusteilnehmer 7a, 7n, dies ist in Figur 4 gezeigt. Der Lokalbusmaster 3 erzeugt in dem hier gezeigten Ausführungsbeispiel entsprechend des ersten Zählerwertes 23 zwei zweite Datenpakete 17a und 17b. Jedes Datenpaket 17a, 17b weist einen zweiten Zählerwert 19a, 19b auf. Mit Hilfe dieses zweiten Zählerwertes 19a, 19b werden die zwei Datenpakete 17a, 17b den kommunikationsbereiten Datenbusteilnehmern 7a und 7n zugewiesen. Hierfür setzt der Lokalbusmaster 3 den zweiten Zählerwert 19a des Datenpakets 17a auf die höchste Binärdarstellung, die der zweite Zählerwert 19a annehmen kann, in dem hier gezeigten Ausführungsbeispiel auf 1111. Der zweite Zählerwert 19b des zweiten Datenpakets 17b wird auf einen um einen im Vergleich zum Datenpaket 17a erniedrigten Wert gesetzt, hier auf 1110. Anschließend werden die Datenpakete 17a, 17b vom Lokalbusmaster 3 an den ersten Datenbusteilnehmer 7a gesendet. Dies ist mit den Datenpaketen 17a und 17b an Position (A) des Lokalbusses 6 angedeutet. Der erste Datenbusteilnehmer 7a empfängt symbolweise die zwei Datenpakete 17a und 17b. Dabei inkrementiert der Datenbusteilnehmer 7a jeweils den zweiten Zählerwert 19a und 19b der zwei Datenpakete 17a und 17b. Stellt der Datenbusteilnehmer 7a beim Inkrementieren von einem von den zweiten Zählerwerten 19a, 19b fest, dass es einen Nulldurchgang gibt, springt also der zweite Zählerwert 19a, 19b eines Datenpakets beim Inkrementieren auf Null, so erkennt der Datenbusteilnehmer 7a, dass das entsprechende Datenpaket 17a, 17b bei dem der zweite Zählerwert 19a, 19b auf Null springt an den Datenbusteilnehmer 7a gerichtet ist.

In dem hier gezeigten Ausführungsbeispiel ist das zuerst gesendete Datenpaket 17a an den Datenbusteilnehmer 7a gerichtet. An diesem Datenbusteilnehmer 7a erfährt der zweite Zählerwert 19a einen Nulldurchgang, wenn der zweite Zählerwert 19a durch den Datenbusteilnehmer 7a erhöht wird. Der Datenbusteilnehmer 7a weiß in diesem Fall, dass die folgenden Symbole, die den Datenbusteilnehmer 7a durchlaufen für diesen Datenbusteilnehmer 7a bestimmt sind. Aus diesem Grund ist in diesem Ausführungsbeispiel der zweite Zählerwert 19a den weiteren Feldern im Informationsteil des Datenpakets 17a vorangestellt, so dass beim Erkennen eines Nulldurchgangs des zweiten Zählerwertes 19a der Datenbusteilnehmer 7a die folgenden Symbole verarbeiten kann. In dem hier gezeigten Ausführungsbeispiel ist der Datenbusteilnehmer 7a dazu ausgelegt, seine Adresse in das Feld 20a des an den Datenbusteilnehmer 7a gerichteten Datenpakets 17a zu schreiben. In dem hier gezeigten Ausführungsbeispiel ist die Adresse des Datenbusteilnehmers 7a #42. Dem Fachmann ist bewusst, dass der Datenbusteilnehmer 7a auch ausgelegt sein kann andere Informationen in das Datenpaket 17a zu schreiben und die Adressinformation hier nur beispielhaft verwendet wird. Das Ende des Datenpakets 17a stellt der Datenbusteilnehmer 7a fest durch den Empfang des Symbols mit dem eineindeutigen Bitmuster 18b des als zweites gesendeten Datenpakets 17b. Der Datenbusteilnehmer 7a erhöht auch den zweiten Zählerwert 19b dieses Datenpakets 17b. Da der Wert des zweiten Zählerwertes 19b durch den Lokalbusmaster 3 aber derart angepasst wurde, dass der Wert des zweiten Zählerwertes 19b des Datenpakets 17b um eins erniedrigt war gegenüber dem Wert des zweiten Zählerwertes 19a des Datenpakets 17a wird noch kein Nulldurchgang erkannt, sondern der Wert des zweiten Zählerwertes 19b des Datenpakets 17b wird nur von 1110 auf 1111 gesetzt. Der Datenbusteilnehmer 7a sendet die Datenpakete 17a' und 17b' symbolweise an den nächsten Datenbusteilnehmer 7b weiter. Da dieser aber noch immer nicht kommunikationsbereit ist, werden die Datenpakete 17a', 17b' unverändert an den nächsten Datenbusteilnehmer 7n weitergeleitet. Dies ist mit den Datenpaketen 17a' und 17b' an Position (B) des Lokalbusses 6 angedeutet. Der Datenbusteilnehmer 7n empfängt ebenfalls die Datenpakete 17a' und 17b' symbolweise und auch dieser Datenbusteilnehmer 7n ist angepasst den Wert des zweiten Zählerwertes 19a, 19b zu erhöhen. Dies führt dazu, dass der Wert des zweiten Zählerwertes 19a des Datenpakets 17a' von 0000 auf 0001 gesetzt wird und der Wert des zweiten Zählerwertes 19b des Datenpakets 17b' einen Nulldurchgang erfährt. Der Datenbusteilnehmer 7n erkennt in diesem Fall, dass das Datenpaket 17b' an den Datenbusteilnehmer 7n gerichtet ist und weiß, dass die folgenden Symbole an den Datenbusteilnehmer 7n gerichtet sind. Entsprechend des Datenbusteilnehmers 7a fügt der Datenbusteilnehmer 7n seine Adresse in das Feld 20b des Datenpakets 17b' ein, wobei die Adresse des Datenbusteilnehmers 7n #88 ist. Auch hier ist dem Fachmann bewusst, dass auch andere Informationen als die Adressinformation in das Datenpaket 17b' geschrieben werden kann. Der Datenbusteilnehmer 7n leitet die Symbole der Datenpakete 17a" und 17n" an den Lokalbusmaster 3 weiter. Dies ist mit den Datenpaketen 17a" und 17b" an Position (C) des Lokalbusses 6 angedeutet. Der Lokalbumaster 3 empfängt die Datenpakete 17a" und 17b" mit den Feldern 20a und 20b und erlangt so Kenntnis darüber, dass der Datenbusteilnehmer 7a die Adresse #42 aufweist und der Datenbusteilnehmer 7n die Adresse #88. Sind die Datenbusteilnehmer 7a, 7n angepasst andere Informationen in die Datenpakete 17a, 17b zu schreiben, so erlangt der Lokalbusmaster 3 entsprechend Kenntnis über diese Informationen. Der Lokalbusmaster 3 kann dabei verifizieren, dass das Initialisieren erfolgreich war, wenn der Wert des zweiten Zählerwertes 19b des letzten Datenpakets 17b" gleich Null ist, vorausgesetzt es findet keine weitere Verarbeitung der Datenpakete auf der Aufwärtsrichtung statt.

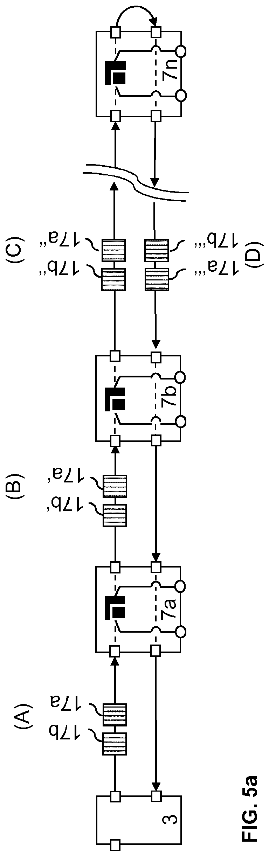

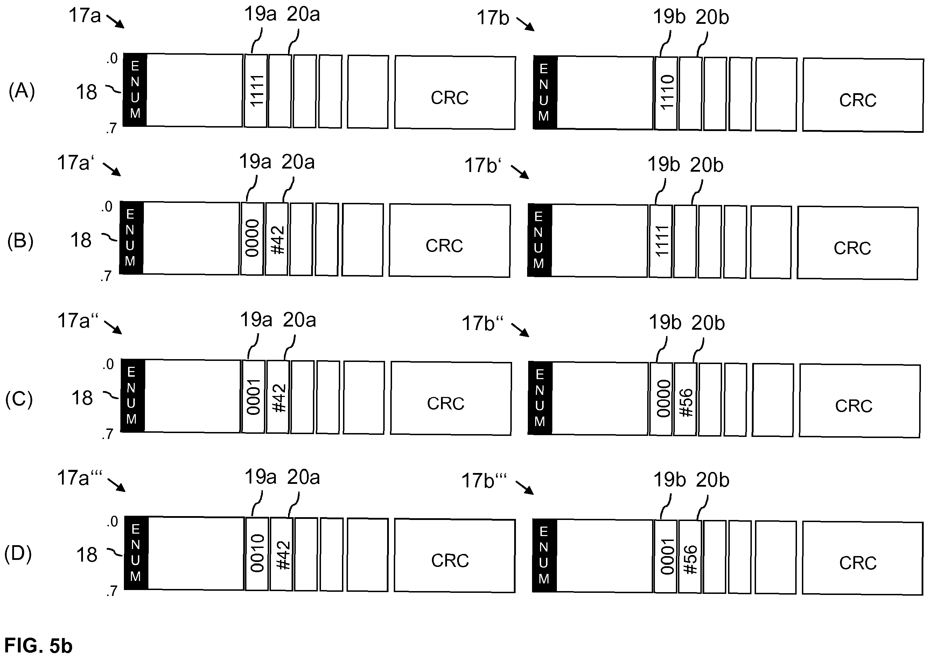

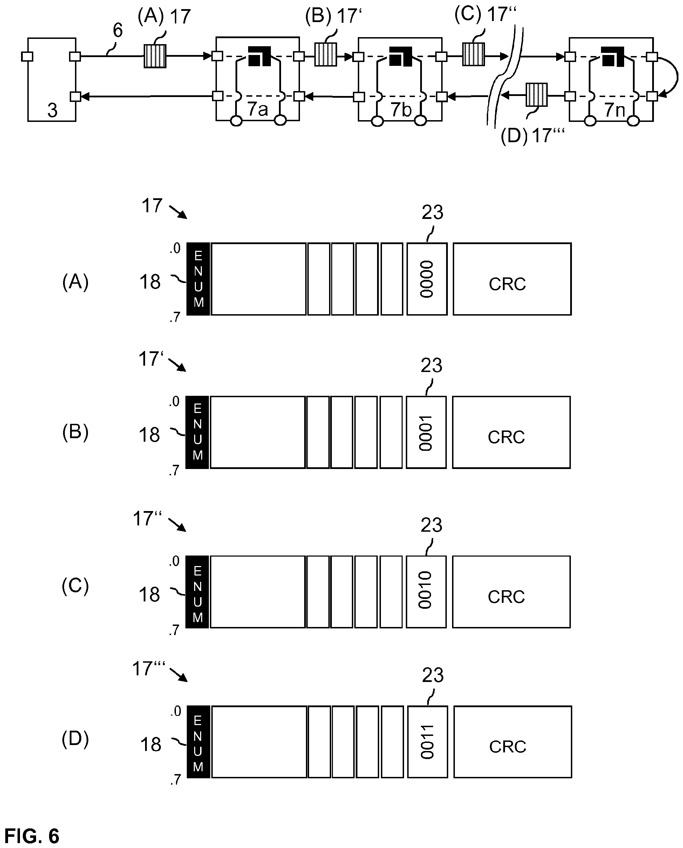

Figuren 5a und 5b zeigen die gleiche Situation wie Figur 4, nämlich das Durchleiten von zwei Datenpaketen 17a und 17b durch den Lokalbus 6, wobei jeder kommunikationsbereite Datenbusteilnehmer 7a, 7b, ..., 7n bei einem detektierten Nulldurchgang des Wertes des zweiten Zählerwertes 19a, 19b seine Adresse in das folgende Feld 20a, 20b des jeweiligen Datenpakets 17a, 17b schreibt. In dem Fall in den Figuren 5a und 5b ist im Unterschied zu der Situation in Figur 4 allerdings in der Zwischenzeit, beispielsweise nach dem Durchlauf des ersten Datenpakets 17 zum Abzählen der kommunikationsbereiten und vor dem Durchlauf der zweiten Datenpakete 17a, 17b, der Datenbusteilnehmer 7b kommunikationsbereit geworden. D.h. der Datenbusteilnehmer 7b leitet die Datenpakete 17a' und 17b' nicht einfach durch, sondern verarbeitet diese. Vom Lokalbusmaster 3 zum Datenbusteilnehmer 7a entspricht die Situation der Figur 4. Dies ist mit den Datenpaketen 17a und 17b an Position (A) des Lokalbusses 6 angedeutet. Der Datenbusteilnehmer 7a empfängt die Datenpakete 17a, 17b, erhöht die Werte der jeweiligen zweiten Zählerwerte 19a, 19b und erkennt im Datenpaket 17a einen Nulldurchgang des Wertes des zweiten Zählerwertes 19a dieses Datenpakets 17a und schreibt seine Adresse #42 in das Feld 20a des Datenpakets 17a. Auch erhöht der Datenbusteilnehmer 7a den Wert des zweiten Zählerwertes 19b des Datenpakets 17b um einen Wert von 1110 auf 1111 und leitet die Datenpakete 17a', 17b' an den nächsten Datenbusteilnehmer 7b weiter. Dies ist mit den Datenpaketen 17a' und 17b' an Position (B) des Lokalbusses 6 angedeutet. Der Datenbusteilnehmer 7b ist nunmehr kommunikationsbereit und führt die gleichen Verarbeitungen aus wie die Datenbusteilnehmer 7a und 7n. Der Datenbusteilnehmer 7b erhöht entsprechend den Wert der zweiten Zählerwerte 19a, 19b der jeweiligen Datenpakete 17a', 17b' und erkennt beim Wert des zweiten Zählerwertes 19b des Datenpakets 17b' einen Nulldurchgang. D.h. der Datenbusteilnehmer 7b schreibt seine Adresse #56 in das Feld 20b des Datenpakets 17b'. Die Datenpakete 17a' und 17b' werden von dem Datenbusteilnehmer 7b an den nächsten Datenbusteilnehmer 7n geleitet. Dies ist mit den Datenpaketen 17a" und 17b" an Position (C) des Lokalbusses 6 angedeutet. Der Datenbusteilnehmer 7n erkennt aber in keinem der Datenpakete 17a", 17b" nunmehr noch einen Nulldurchgang, weil das an diesen Datenbusteilnehmer 7n gerichtete Datenpaket 17b" bereits von dem zweiten Datenbusteilnehmer 7b verwendet wurde, um seine Adresse zu kommunizieren. Der Datenbusteilnehmer 7n erhöht dementsprechend zwar den Wert der zweiten Zählerwerte 19a, 19b der jeweiligen Datenpakete 17a", 17b" aber kommuniziert nicht seine Adresse. Der Datenbusteilnehmer 7n leitet die Datenpakete 17a‴, 17b‴ aber an den Lokalbusmaster 3. Dies ist mit den Datenpaketen 17a‴ und 17b‴ an Position (D) des Lokalbusses 6 angedeutet. Der Lokalbusmaster 3 erkennt, dass der Wert des zweiten Zählerwertes 19b des letzten Datenpakets 17b‴ von Null abweicht. D.h. der Lokalbusmaster 3 erkennt, dass die Anzahl der gesendeten Datenpakete 17a, 17b nicht zur Anzahl der kommunikationsbereiten Datenbusteilnehmer 7a, 7b, ..., 7n passt. Dabei erkennt der Lokalbusmaster 3 aus der Abweichung zwischen dem Wert des zweiten Zählerwertes 19b des letzten Datenpakets 17b‴ im Vergleich zum Wert des ersten Zählerwertes 23 verwendet zum Abzählen der kommunikationsbereiten Datenbusteilnehmer 7a, 7b, ..., 7n, wie viele kommunikationsbereite Datenbusteilnehmer 7a, 7b, ..., 7n hinzugekommen sind. Der Lokalbusmaster 3 kann diese Information verwenden, um erneut eine entsprechende Anzahl von Datenpaketen zu senden. Der Lokalbusmaster 3 kann aber auch nach dem Erkennen, dass ein oder mehrere neue Datenbusteilnehmer 7b kommunikationsbereit geworden sind eine vorher bestimmte Zeit abwarten, bevor erneut ein einzelnes erstes Datenpaket 17 zum Abzählen der nunmehr am Lokalbus 6 vorhandenen kommunikationsbereiten Datenbusteilnehmer 7a, 7b, ..., 7n gesendet wird, dies ist in Figur 6 gezeigt.

Figur 6 zeigt das erneute Abzählen der am Lokalbus 6 vorhandenen kommunikationsbereiten Datenbusteilnehmer 7a, 7b, ..., 7n. Zu einer gegebenen Zeit sendet der Lokalbusmaster 3 ein einzelnes erstes Datenpaket 17 symbolweise an den kommunikationsbereiten Datenbusteilnehmer 7a. Dies ist mit dem Datenpaket 17 an Position (A) des Lokalbusses 6 angedeutet. D.h. der Datenbusteilnehmer 7a empfängt zunächst das Feld 18 des Datenpakets mit dem eineindeutigen Bitmuster und hat Kenntnis darüber, dass nun eine Initialisierung stattfindet. Wenn dann das Feld 23 am Datenbusteilnehmer 7a empfangen wird, kann dieser eine Verarbeitung damit durchführen, nämlich den Wert dieses Feldes 23 ändern. In dem hier gezeigten Ausführungsbeispiel weist das Feld 23 einen Binärwert auf und der Datenbusteilnehmer 7a inkrementiert den Binärwert. In dem hier gezeigten Ausführungsbeispiel wurde der Wert des ersten Zählerwertes 23 vom Lokalbusmaster 3 auf 0000 gesetzt und der Datenbusteilnehmer 7a hat diesen Wert um einen inkrementiert auf 0001. D.h. nach dem Durchlauf durch den Datenbusteilnehmer 7a unterscheidet sich das Datenpaket von dem Datenpaket 17, welches vom Lokalbusmaster 3 gesendet wurde, dies ist in dem hier gezeigten Ausführungsbeispiel im weiteren mit der Kennzeichnung des Datenpakets als Datenpaket 17' gezeigt. Der Datenbusteilnehmer 7a selbst sendet auch symbolweise das Datenpaket 17' weiter an den nächsten Datenbusteilnehmer 7b. Der Datenbusteilnehmer 7b empfängt das Datenpaket 17' und inkrementiert den Wert des ersten Zählerwertes 23. D.h. dass nach dem Durchlauf durch den Datenbusteilnehmer 7b sich das Datenpaket von dem Datenpaket 17' unterscheidet, welches vom Datenbusteilnehmer 7a gesendet wurde. Dies ist in dem hier gezeigten Ausführungsbeispiel im weiteren mit der Kennzeichnung des Datenpakets als Datenpaket 17" gezeigt. Der Datenbusteilnehmer 7b selbst sendet auch symbolweise das Datenpaket 17" weiter an den nächsten Datenbusteilnehmer 7n. Der Datenbusteilnehmer 7n empfängt das Datenpaket 17" und inkrementiert den Wert des ersten Zählerwertes 23. D.h. dass sich nach dem Durchlauf durch den Datenbusteilnehmer 7n das Datenpaket von dem Datenpaket 17" unterscheidet, welches vom Datenbusteilnehmer 7b gesendet wurde. Dies ist in dem hier gezeigten Ausführungsbeispiel im weiteren mit der Kennzeichnung des Datenpakets als Datenpaket 17‴ gezeigt. Der Datenbusteilnehmer 7n selbst sendet auch symbolweise das Datenpaket 17‴ weiter an den Lokalbusmaster 3. Der Lokalbusmaster 3 hat dann Kenntnis darüber, wie viele kommunikationsbereite Datenbusteilnehmer 7a, 7b, ..., 7n der Lokalbus 6 aufweist.

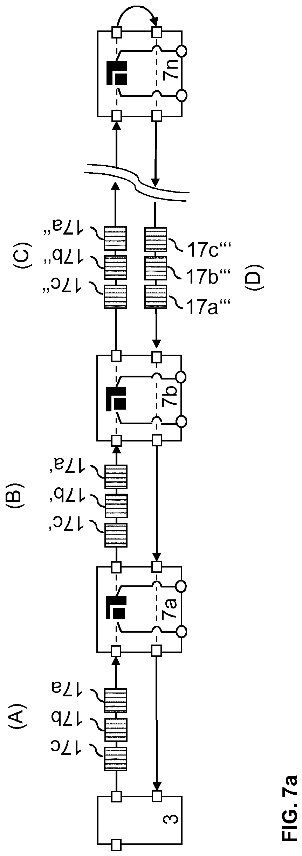

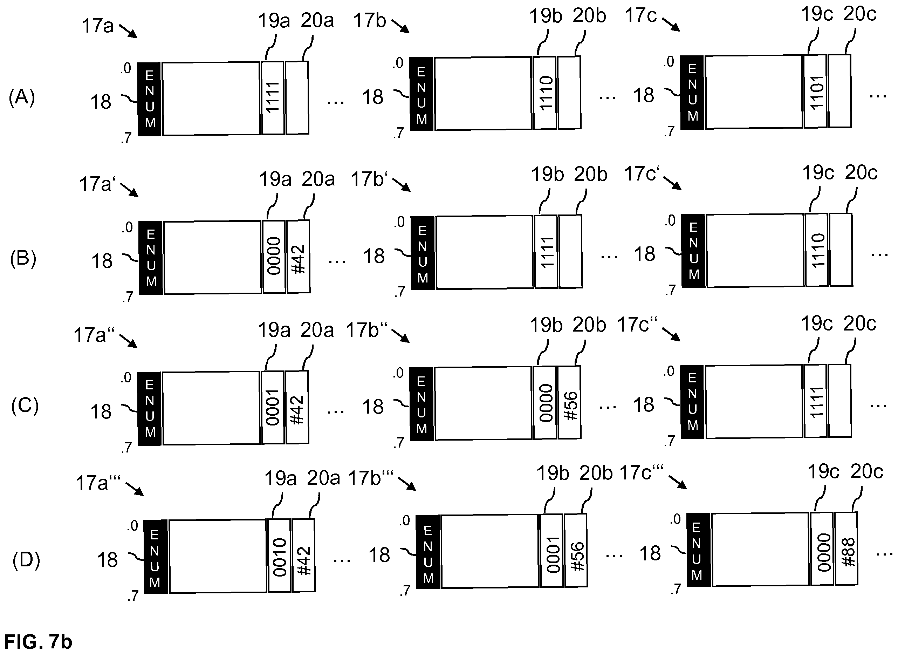

Anschließend werden erneut eine Anzahl von zweiten Datenpaketen 17a, 17b, 17c vom Lokalbusmaster 3 erzeugt. Die Werte der zweiten Zählerwerte 19a, 19b, 19c der jeweiligen Datenpakete 17a, 17b, 17c sind jeweils angepasst, die Datenpakete 17a, 17b, 17c den jeweiligen Datenbusteilnehmern 7a, 7b, ..., 7n der Reihe nach zuzuweisen. Die ist in den Figuren 7a und 7b gezeigt.

Der Lokalbusmaster 3 passt den Wert des zweiten Zählerwertes 19a, 19b, 19c der jeweiligen Datenpakte 17a, 17b, 17c so an, dass diese sich jeweils um einen Wert unterscheiden und das erste Datenpaket 17a den höchsten Wert des zweiten Zählerwertes 19a aufweist. Die Datenpakete 17a, 17b, 17c werden symbolweise auf den Lokalbus 6 gesendet. Dies ist mit den Datenpaketen 17a, 17b, 17c an Position (A) des Lokalbusses 6 angedeutet. Der Datenbusteilnehmer 7a empfängt die Datenpakete 17a, 17b, 17c und erhöht jeweils den Wert des zweiten Zählerwertes 19a, 19b, 19c der jeweiligen Datenpakete 17a, 17b, 17c. Bei dem Datenpaket 17a erkennt der Datenbusteilnehmer 7a beim Erhöhen des zweiten Zählerwertes 19a einen Nulldurchgang und erkennt, dass dieses Datenpaket 17a an den Datenbusteilnehmer 7a gerichtet ist. Der Datenbusteilnehmer 7a schreibt entsprechend seine Adresse #42 in das folgende Feld 20a des Datenpakets 17a. Die Datenpakete 17a', 17b', 17c' werden von dem Datenbusteilnehmer 7a an den Datenbusteilnehmer 7b weitergeleitet. Dies ist mit den Datenpaketen 17a', 17b', 17c' an Position (B) des Lokalbusses 6 angedeutet. Auch dieser Datenbusteilnehmer 7b erhöht die Werte der zweiten Zählerwerte 19a, 19b, 19c der jeweiligen Datenpakete 17a', 17b', 17c' und stellt beim Datenpaket 17b' einen Nulldurchgang des Wertes des zweiten Zählerwertes 19b fest. Hierdurch erkennt der Datenbusteilnehmer 7b, dass das Datenpaket 17b' an den Datenbusteilnehmer 7b gerichtet ist. Der Datenbusteilnehmer 7b schreibt entsprechend seine Adresse #56 in das folgende Feld 20b des Datenpakets 17b'. Die Datenpakete 17a", 17b", 17c" werden von dem Datenbusteilnehmer 7b an den Datenbusteilnehmer 7n weitergeleitet. Dies ist mit den Datenpaketen 17a", 17b", 17c" an Position (C) des Lokalbusses 6 angedeutet. Auch dieser Datenbusteilnehmer 7n erhöht die Werte der zweiten Zählerwerte 19a, 19b, 19c der jeweiligen Datenpakete 17a", 17b", 17c" und stellt beim Datenpaket 17c" einen Nulldurchgang des Wertes des zweiten Zählerwertes 19c fest. Hierdurch erkennt der Datenbusteilnehmer 7n, dass das Datenpaket 17c" an den Datenbusteilnehmer 7n gerichtet ist. Der Datenbusteilnehmer 7n schreibt entsprechend seine Adresse #88 in das folgende Feld 20c des Datenpakets 17c". Die Datenpakete 17a‴, 17b‴, 17c‴ werden von dem Datenbusteilnehmer 7n an den Lokalbusmaster 3 zurückgeleitet. Dies ist mit den Datenpaketen 17a‴, 17b‴, 17c‴ an Position (D) des Lokalbusses 6 angedeutet.

Nach Erhalt der Datenpakete 17a‴, 17b‴, 17c‴ kennt der Lokalbusmaster 3 die Adressen der Datenbusteilnehmer 7a, 7b, ..., 7n, nämlich #42, #56, #88. Der Lokalbusmaster 3 kann auch verifizieren, ob zwischenzeitlich neue Datenbusteilnehmer kommunikationsbereit geworden sind, beispielsweise durch das Bestimmen, ob der Wert des zweiten Zählerwertes 19c des letzten Datenpakets 17c‴ gleich Null ist oder abweicht. Im Falle dessen, dass der Wert des zweiten Zählerwertes 19c des letzten Datenpakets 17c‴ Null entspricht, sind die Adressinformation in den Datenpaketen valide. Ansonsten wird erneut abgezählt und das Verfahren beginnt von neuem.

Nach Verifizierung der Adressinformationen in den Datenpaketen 17a‴, 17b‴, 17c‴, durch Bestimmen ob der Wert des zweiten Zählerwertes 19c des letzten Datenpakets 17c‴ gleich Null ist, kann der Lokalbusmaster 3 angepasst sein erneut zumindest ein erstes Datenpaket 17 zu senden, um erneut alle Datenbusteilnehmer 17a, 17b, 17c abzuzählen und zu verifizieren, dass sich die Anzahl an kommunikationsbereiten Datenbusteilnehmern 7a, 7b, ..., 7n nicht geändert hat.

Auch wenn hier nur der Austausch von Adressinformationen beschrieben ist, ist dem Fachmann bewusst, dass auch andere Daten auf die aufgezeigte Weise mit dem Lokalbusmaster 3 ausgetauscht werden können. Dem Fachmann ist auch bewusst, dass die beschriebenen Verfahren vom Lokalbusmaster 3 während einer Initialisierung des Lokalbusses 6 verwendet werden können, um Informationen über die kommunikationsbereiten Datenbusteilnehmer 7a, 7b, ..., 7n zu sammeln auch wenn die Adressen dieser Datenbusteilnehmer 7a, 7b, ..., 7n nicht bekannt sind aber der zweite Zählerwert 19 zur relativen Adressierung der Datenpakete verwendet werden kann.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 6: Ringbus
- 7a, b, n: Datenbusteilnehmer
- 8: erste Abwärtsdatenschnittstelle
- 9: zweite Abwärtsdatenschnittstelle
- 10: erste Aufwärtsdatenschnittstelle
- 11: zweite Aufwärtsdatenschnittstelle
- 12: Verarbeitungseinheit
- 12': Speicher
- 13,14: Ein-/Ausgänge
- 15: Sensor
- 16: Aktor
- 17: erstes / zweites Datenpaket
- 17a, b, c: Anzahl an zweiten Datenpaketen
- 18: Bitmuster
- 19: zweiter Zählerwert
- 20: Feld zum Speichern der Adresse eines Datenbusteilnehmers
- 21: Feld zum Zuweisen einer Adresse an einen Datenbusteilnehmer
- 22: Steuerinformation
- 23: erster Zählerwert

## Patentansprüche

1. Ein Verfahren zur Kommunikation mit Datenbusteilnehmern (7a, 7b, ..., 7n) verbunden mit einem Lokalbus (6), insbesondere einem Ringbus, mit einem Lokalbusmaster (3), das Verfahren aufweisend:
Senden eines ersten Datenpakets (17) von dem Lokalbusmaster (3) an alle Datenbusteilnehmer (7a, 7b, ..., 7n) zum Abzählen von kommunikationsbereiten Datenbusteilnehmern (7a, 7b, ..., 7n) in einer Reihenfolge, wobei das erste Datenpaket (17) einen ersten Zählerwert (23) aufweist, der von jedem der kommunikationsbereiten Datenbusteilnehmer (7a, 7b, ..., 7n) in der Reihenfolge geändert wird; und
Senden einer Anzahl von zweiten Datenpaketen (17a, 17b, 17c) von dem Lokalbusmaster (3) an alle Datenbusteilnehmer (7a, 7b, ..., 7n), wobei die Anzahl der zweiten Datenpakete (17a, 17b, 17c) basiert auf dem ersten Zählerwert (23) und wobei jedes der zweiten Datenpakete (17a, 17b, 17c) einem der kommunikationsbereiten Datenbusteilnehmer (7a, 7b, ..., 7n) zugewiesen ist basierend auf der jeweiligen relativen Position der kommunikationsbereiten Datenbusteilnehmer (7a, 7b, ..., 7n) innerhalb der Reihenfolge und wobei das erste Datenpaket (17) und die Anzahl von zweiten Datenpaketen (17a, 17b, 17c) vom gleichen Typ sind.

2. Das Verfahren nach Anspruch 1, wobei jedes der zweiten Datenpakete (17a, 17b, 17c) einen zweiten Zählerwert (19) zur Zuweisung aufweist, wobei der zweite Zählerwert (19) von jedem der kommunikationsbereiten Datenbusteilnehmer (7a, 7b, ..., 7n) in der Reihenfolge geändert wird; und
wobei sich Startwerte des zweiten Zählerwertes (19) insbesondere für jedes der zweiten Datenpakete (17a, 17b, 17c) unterscheiden.

3. Das Verfahren nach einem der vorhergehenden Ansprüche, weiter aufweisend:
Verarbeiten von jedem zweiten Datenpaket (17a, 17b, 17c) durch jeden der kommunikationsbereiten Datenbusteilnehmer (7a, 7b, ..., 7n), wobei die zweiten Datenpakete (17a, 17b, 17c) nacheinander verarbeitet werden.

4. Das Verfahren nach Anspruch 3, wobei das Verarbeiten weiter aufweist:
Verändern des zweiten Zählerwertes (19) in jedem der zweiten Datenpakete (17a, 17b, 17c) durch jeden der kommunikationsbereiten Datenbusteilnehmer (7a, 7b, ..., 7n).

5. Das Verfahren nach Anspruch 4, weiter aufweisend:
Vergleichen des zweiten Zählerwertes (19) in jedem der zweiten Datenpakete (17a, 17b, 17c) mit einem Referenzwert durch jeden der kommunikationsbereiten Datenbusteilnehmer (7a, 7b, ..., 7n).

6. Das Verfahren nach Anspruch 5, weiter aufweisend:
Schreiben einer in einem Datenbusteilnehmer (7a, 7b, ..., 7n) gespeicherten Information in ein Feld (20) eines der zweiten Datenpakete (17a, 17b, 17c), wenn ein aktueller zweiter Zählerwert (19) des aktuellen zweiten Datenpakets (17a, 17b, 17c) dem Referenzwert entspricht.

7. Das Verfahren nach einem der vorhergehenden Ansprüche, wobei der erste Zählerwert (23) und /oder der zweite Zählerwert (19) ein Binärwert ist.

8. Das Verfahren nach einem der vorhergehenden Ansprüche, weiter aufweisend:
Vergleichen des ersten Zählerwertes (23) und / oder des zweiten Zählerwertes (19) zumindest eines der zweiten Datenpakete (17a, 17b, 17c) mit einem erwarteten Wert, nachdem das zumindest eine der zweiten Datenpakete (17a, 17b, 17c) durch jeden der kommunikationsbereiten Datenbusteilnehmer (7a, 7b, ..., 7n) verarbeitet wurde.

9. Das Verfahren nach Anspruch 8, wobei der erwartete Wert auf dem ersten Zählerwert (23) des ersten Datenpakets (17) basiert, nachdem das erste Datenpaket (17) durch jeden der kommunikationsbereiten Datenbusteilnehmer (7a, 7b, ..., 7n) verarbeitet wurde.

10. Das Verfahren nach einem der Ansprüche 8 oder 9, weiter aufweisend:
erneutes Senden eines ersten Datenpakets (17) an alle Datenbusteilnehmer (7a, 7b, ..., 7n), wenn der Vergleich eine Abweichung zeigt.

11. Das Verfahren nach Anspruch 10, weiter aufweisend:
erneutes Senden einer Anzahl von zweiten Datenpaketen (17a, 17b, 17c), wobei die Anzahl auf dem ersten Zählerwert (23) des erneut gesendeten ersten Datenpakets (17) basiert, nachdem das erneut gesendete erste Datenpaket (17) durch jeden der kommunikationsbereiten Datenbusteilnehmer (7a, 7b, ..., 7n) verarbeitet wurde.

12. Ein Lokalbusmaster (3) eines Lokalbusses (6), insbesondere eines Ringbusses, mit Datenbusteilnehmern (7a, 7b, ..., 7n), der Lokalbusmaster (3) aufweisend:
ein Mittel zum Senden eines ersten Datenpaketes (17) an alle Datenbusteilnehmer (7a, 7b, ..., 7n) zum Abzählen von kommunikationsbereiten Datenbusteilnehmern (7a, 7b, ..., 7n) in einer Reihenfolge, wobei das erste Datenpaket (17) einen ersten Zählerwert (23) aufweist, für eine Änderung dieses ersten Zählerwertes (23) durch jeden kommunikationsbereiten Datenbusteilnehmer (7a, 7b, ..., 7n) in der Reihenfolge;
ein Mittel zum Empfangen des ersten Datenpakets (17) mit dem durch jeden kommunikationsbereiten Datenbusteilnehmer (7a, 7b, ..., 7n) geänderten ersten Zählerwert (23); und
ein Mittel zum Senden einer Anzahl von zweiten Datenpaketen (17a, 17b, 17c),
wobei die Anzahl basiert auf dem ersten Zählerwert (23) des empfangenen ersten Datenpakets (17) und wobei jedes der zweiten Datenpakete (17a, 17b, 17c) einem der kommunikationsbereiten Datenbusteilnehmer (7a, 7b, ..., 7n) zugewiesen ist basierend auf der jeweiligen relativen Position der kommunikationsbereiten Datenbusteilnehmer (7a, 7b, ..., 7n) in der Reihenfolge und wobei das erste Datenpaket (17) und die Anzahl von zweiten Datenpaketen (17a, 17b, 17c) vom gleichen Typ sind.

13. Ein Lokalbussystem aufweisend:
einen Lokalbus (6), insbesondere einen Ringbus,
mit einem Lokalbusmaster (3) gemäß Anspruch 12 und
mit Datenbusteilnehmern (7a, 7b, ..., 7n).

14. Ein Verfahren zur Kommunikation mit einem Lokalbusmaster (3) eines Lokalbusses (6), insbesondere eines Ringbusses, mit kommunikationsbereiten Datenbusteilnehmern (7a, 7b, ..., 7n), das Verfahren aufweisend:
Empfangen an einem kommunikationsbereiten Datenbusteilnehmer (7a, 7b, ..., 7n) ein erstes Datenpaket (17) von einem Lokalbusmaster (3) gemäß Anspruch 12, wobei das erste Datenpaket (17) einen ersten Zählerwert (23) aufweist;
Ändern des ersten Zählerwertes (23) in dem ersten Datenpaket (17) durch den kommunikationsbereiten Datenbusteilnehmer (7a, 7b, ..., 7n);
Empfangen einer Anzahl von zweiten Datenpaketen (17a, 17b, 17c); und
Schreiben einer in dem kommunikationsbereiten Datenbusteilnehmer (7a, 7b, ..., 7n) gespeicherten Information in ein Feld (20) eines der zweiten Datenpakete (17a, 17b, 17c), wenn das zweite Datenpaket (17a, 17b, 17c) dem kommunikationsbereiten Datenbusteilnehmer (7a, 7b, ..., 7n) zugewiesen ist und wobei das erste Datenpaket (17) und die Anzahl von zweiten Datenpaketen (17a, 17b, 17c) vom gleichen Typ sind.

15. Ein kommunikationsbereiter Datenbusteilnehmer (7a, 7b, ..., 7n) eines Lokalbusses (6), insbesondere eines Ringbusses, mit einem Lokalbusmaster (3), der kommunikationsbereite Datenbusteilnehmer (7a, 7b, ..., 7n) aufweisend:
ein Mittel zum Empfangen eines ersten Datenpakets (17) von dem Lokalbusmaster (3) gemäß Anspruch 12, wobei das erste Datenpaket (17) einen ersten Zählerwert (23) aufweist;
ein Mittel zum Ändern des ersten Zählerwertes (23) in dem ersten Datenpaket (17);
ein Mittel zum Empfangen einer Anzahl von zweiten Datenpaketen (17a, 17b, 17c); und
ein Mittel zum Schreiben einer in dem kommunikationsbereiten Datenbusteilnehmer (7a, 7b, ..., 7n) gespeicherten Information in ein Feld (20) eines der zweiten Datenpakete (17a, 17b, 17c), wenn das zweite Datenpaket (17a, 17b, 17c) dem kommunikationsbereiten Datenbusteilnehmer (7a, 7b, ..., 7n) zugewiesen ist und wobei das erste Datenpaket (17) und die Anzahl von zweiten Datenpaketen (17a, 17b, 17c) vom gleichen Typ sind.

## Claims

1. A method for communication with data bus subscribers (7a, 7b, ..., 7n) connected to a local bus (6), in particular a ring bus, with a local bus master (3), the method comprising:
sending a first data packet (17) from the local bus master (3) to all data bus subscribers (7a, 7b, ..., 7n) for counting communication-ready data bus subscribers (7a, 7b, ..., 7n) in an order, the first data packet (17) having a first counter value (23) that each of the communication-ready data bus subscribers (7a, 7b, ..., 7n) in the order changes; and
sending a plurality of second data packets (17a, 17b, 17c) from the local bus master (3) to all data bus subscribers (7a, 7b, ..., 7n), wherein the plurality of the second data packets (17a, 17b, 17c) is based on the first counter value (23) and wherein each of the second data packets (17a, 17b, 17c) is assigned to one of the communication-ready data bus subscribers (7a, 7b, ..., ..., 7n) based on the respective relative position of the communication-ready data bus subscribers (7a, 7b, ..., 7n) within the order, and wherein the first data packet (17) and the plurality of second data packets (17a, 17b, 17c) are of the same type.

2. The method according to claim 1, wherein each of the second data packets (17a, 17b, 17c) has a second counter value (19) for assignation, wherein each of said communication-ready data bus subscribers (7a, 7b, ..., 7n) in order changes the second counter value (19); and
wherein starting values of the second counter value (19) differ in particular for each of the second data packets (17a, 17b, 17c).

3. The method according to any of the preceding claims, further comprising:
processing every second data packet (17a, 17b, 17c) by each of the communication-ready data bus subscribers (7a, 7b, ..., 7n), wherein the second data packets (17a, 17b, 17c) are processed in succession.

4. The method according to claim 3, wherein the processing further comprises:
changing the second counter value (19) in each of the second data packets (17a, 17b, 17c) by each of the communication-ready data bus subscribers (7a, 7b, ..., 7n).

5. The method of claim 4, further comprising:
comparing the second counter value (19) in each of the second data packets (17a, 17b, 17c) with a reference value by each of the communication-ready data bus subscribers (7a, 7b, ..., 7n).

6. The method according to claim 5, further comprising:
writing information stored in a data bus subscriber (7a, 7b, ..., 7n) into a field (20) of one of the second data packets (17a, 17b, 17c) if a current second counter value (19) of the current second data packet (17a, 17b, 17c) corresponds to the reference value.

7. The method according to any of the preceding claims, wherein the first counter value (23) and/or the second counter value (19) is a binary value.

8. The method according to any of the preceding claims, further comprising:
comparing the first counter value (23) and/or the second counter value (19) of at least one of the second data packets (17a, 17b, 17c) with an expected value after the at least one of the second data packets (17a, 17b, 17c) has been processed by each of the communication-ready data bus subscribers (7a, 7b, ..., 7n).

9. The method according to claim 8, wherein the expected value is based on the first counter value (23) of the first data packet (17) after the first data packet (17) has been processed by each of the communication-ready data bus subscribers (7a, 7b, ..., 7n).

10. The method according to any of claims 8 or 9, further comprising:
resending a first data packet (17) to all of the data bus subscribers (7a, 7b, ..., 7n) if the comparison shows a deviation.

11. The method according to claim 10, further comprising:
resending a plurality of second data packets (17a, 17b, 17c), wherein the number thereof is based on the first counter value (23) of the resent first data packet (17) after the resent first data packet (17) has been processed by each of the communication-ready data bus subscribers (7a, 7b, ..., 7n).

12. A local bus master (3) of a local bus (6), in particular a ring bus, with data bus subscribers (7a, 7b, ..., 7n), the local bus master (3) comprising:
means for sending a first data packet (17) to all data bus subscribers (7a, 7b, ..., 7n) for counting communication-ready data bus subscribers (7a, 7b, ..., 7n) in an order, wherein the first data packet (17) comprises a first counter value (23), for a change of this first counter value (23) by each communication-ready data bus subscriber (7a, 7b, ..., 7n) in the order;
means for receiving the first data packet (17) with the first counter value (23) changed by each communication-ready data bus subscriber (7a, 7b, ..., 7n); and
means for sending a plurality of second data packets (17a, 17b, 17c), the number thereof being based on the first counter value (23) of the received first data packet (17), and wherein each of the second data packets (17a, 17b,
17c) is assigned to one of the communication-ready data bus subscribers (7a, 7b, ..., 7n) based on the respective relative position of the communication-ready data bus subscribers (7a, 7b, ..., 7n) in the order, and
wherein the first data packet (17) and the plurality of second data packets (17a, 17b, 17c) are of the same type.

13. A local bus system, comprising:
a local bus (6), in particular a ring bus,
with a local bus master (3) according to claim 12 and
with data bus subscribers (7a, 7b, ..., 7n).

14. A method for communication with a local bus master (3) of a local bus (6), in particular of a ring bus, with communication-ready data bus subscribers (7a, 7b, ..., 7n), the method comprising:
receiving at a communication-ready data bus subscriber (7a, 7b, ..., 7n) a first data packet (17) from a local bus master (3) according to claim 12, wherein the first data packet (17) comprises a first counter value (23);
changing the first counter value (23) in the first data packet (17) by the communication-ready data bus subscriber (7a, 7b, ..., 7n);
receiving a plurality of second data packets (17a, 17b, 17c); and
writing information stored in the communication-ready data bus subscriber (7a, 7b, ..., 7n) into a field (20) of one of the second data packets (17a, 17b, 17c) if the second data packet (17a, 17b, 17c) is assigned to the communication-ready data bus subscriber (7a, 7b, ..., 7n), and wherein the first data packet (17) and the plurality of second data packets (17a, 17b, 17c) are of the same type.

15. A communication-ready data bus subscriber (7a, 7b, ..., 7n) of a local bus (6), in particular of a ring bus, with a local bus master (3), the communication-ready data bus subscriber (7a, 7b, ..., 7n) comprising:
means for receiving a first data packet (17) from the local bus master (3) according to claim 12, wherein the first data packet (17) comprises a first counter value (23);
means for changing the first counter value (23) in the first data packet (17);
means for receiving a plurality of second data packets (17a, 17b, 17c); and
means for writing information stored in the communication-ready data bus subscriber (7a, 7b, ..., 7n) into a field (20) of one of the second data packets (17a, 17b, 17c) if the second data packet (17a, 17b, 17c) is assigned to the communication-ready data bus subscriber (7a, 7b, ..., 7n), and wherein the first data packet (17) and the plurality of second data packets (17a, 17b, 17c) are of the same type.

## Revendications

1. Un procédé de communication avec des participants de bus de données (7a, 7b, ..., 7n) reliés à un bus local (6), en particulier à un bus en anneau, comprenant un maître de bus local (3), le procédé comprenant :
l'envoi d'un premier paquet de données (17) par le maître de bus local (3) à tous les participants de bus de données (7a, 7b, ..., 7n) pour compter des participants de bus de données prêts à communiquer (7a, 7b, ..., 7n) en une séquence, le premier paquet de données (17) comportant une première valeur de compteur (23) qui est modifiée par chacun des participants de bus de données prêts à communiquer (7a, 7b, ..., 7n) dans la séquence ;
l'envoi d'un nombre de seconds paquets de données (17a, 17b, 17c) par le maître de bus local (3) à tous les participants de bus de données (7a, 7b, ..., 7n), le nombre de seconds paquets de données (17a, 17b, 17c) étant basé sur la première valeur de compteur (23), et chacun des seconds paquets de données (17a, 17b, 17c) étant affecté à un des participants de bus de données prêts à communiquer (7a, 7b, ..., 7n) sur la base de la position relative respective des participants de bus de données prêts à communiquer (7a, 7b, ..., 7n) à l'intérieur de la séquence, et le premier paquet de données (17) et le nombre de seconds paquets de données (17a, 17b, 17c) étant du même type.

2. Le procédé selon la revendication 1, dans lequel chacun des seconds paquets de données (17a, 17b, 17c) comporte une seconde valeur de compteur (19) pour l'affectation, la seconde valeur de compteur (19) étant modifiée par chacun des participants de bus de données prêts à communiquer (7a, 7b, ..., 7n) dans la séquence ; et
des valeurs de départ de la seconde valeur de compteur (19) se différencient en particulier pour chacun des seconds paquets de données (17a, 17b, 17c).

3. Le procédé selon une des revendications précédentes, comprenant en outre :
le traitement de chaque second paquet de données (17a, 17b, 17c) par l'intermédiaire de chacun des participants de bus de données prêts à communiquer (7a, 7b, ..., 7n), les seconds paquets de données (17a, 17b, 17c) étant traités les uns après les autres.

4. Le procédé selon la revendication 3, dans lequel le traitement comprend en outre :
la modification de la seconde valeur de compteur (19) dans chacun des seconds paquets de données (17a, 17b, 17c) par l'intermédiaire de chacun des participants de bus de données prêts à communiquer (7a, 7b, ..., 7n).

5. Le procédé selon la revendication 4, comprenant en outre :
la comparaison de la seconde valeur de compteur (19) dans chacun des seconds paquets de données (17a, 17b, 17c) avec une valeur de référence par l'intermédiaire de chacun des participants de bus de données prêts à communiquer (7a, 7b, ..., 7n).

6. Le procédé selon la revendication 5, comprenant en outre :
l'écriture d'une information mémorisée dans un participant de bus de données (7a, 7b, ..., 7n) dans un champ (20) d'un des seconds paquets de données (17a, 17b, 17c) lorsqu'une seconde valeur de compteur courante (19) du second paquet de données courant (17a, 17b, 17c) correspond à la valeur de référence.

7. Le procédé selon une des revendications précédentes, dans lequel la première valeur de compteur (23) et/ou la seconde valeur de compteur (19) sont une valeur binaire.

8. Le procédé selon une des revendications précédentes, comprenant en outre :
la comparaison de la première valeur de compteur (23) et/ou de la seconde valeur de compteur (19) d'au moins un des seconds paquets de données (17a, 17b, 17c) avec une valeur attendue, après que le au moins un des seconds paquets de données (17a, 17b, 17c) a été traité par l'intermédiaire de chacun des participants de bus de données prêts à communiquer (7a, 7b, ..., 7n).

9. Le procédé selon la revendication 8, dans lequel la valeur attendue est basée sur la première valeur de compteur (23) du premier paquet de données (17) après que le premier paquet de données (17) a été traité par l'intermédiaire de chacun des participants de bus de données prêts à communiquer (7a, 7b, ..., 7n).

10. Le procédé selon une des revendications 8 ou 9, comprenant en outre :
l'envoi à nouveau d'un premier paquet de données (17) vers tous les participants de bus de données (7a, 7b, ..., 7n) lorsque la comparaison révèle un écart.

11. Le procédé selon la revendication 10, comprenant en outre :
l'envoi à nouveau d'un nombre de seconds paquets de données (17a, 17b, 17c), le nombre étant basé sur la première valeur de compteur (23) du premier paquet de données à nouveau émis (17) après que le premier paquet de données à nouveau émis (17) a été traité par l'intermédiaire de chacun des participants de bus de données prêts à communiquer (7a, 7b, ..., 7n).

12. Un maître de bus local (3) d'un bus local (6), en particulier d'un bus en anneau, comprenant des participants de bus de données (7a, 7b, ..., 7n), le maître de bus local (3) comprenant :
un moyen pour envoyer un premier paquet de données (17) à tous les participants de bus de données (7a, 7b, ..., 7n) pour compter des participants de bus de données prêts à communiquer (7a, 7b, ..., 7n) dans une séquence, le premier paquet de données (17) comportant une première valeur de compteur (23), pour une modification de cette première valeur de compteur (23) par l'intermédiaire de chaque participant de bus de données prêts à communiquer (7a, 7b, ..., 7n) dans la séquence ;
un moyen pour recevoir le premier paquet de données (17) avec la première valeur de compteur (23) modifiée par l'intermédiaire de chaque participant de bus de données prêts à communiquer (7a, 7b, ..., 7n) ; et
un moyen pour envoyer un nombre de seconds paquets de données (17a, 17b, 17c), le nombre étant basé sur la première valeur de compteur (23) du premier paquet de données reçu (17), et chacun des seconds paquets de données (17a, 17b, 17c) étant affecté à un des participants de bus de données prêts à communiquer (7a, 7b, ..., 7n) sur la base de la position relative des participants de bus de données prêts à communiquer (7a, 7b, ..., 7n) dans la séquence, et le premier paquet de données (17) et le nombre de seconds paquets de données (17a, 17b, 17c) étant du même type.

13. Un système de bus local comprenant :
un bus local (6), en particulier un bus en anneau, comprenant un maître de bus local (3) selon la revendication 12, et comprenant des participants de bus de données (7a, 7b, ..., 7n).

14. Un procédé de communication comprenant un maître de bus local (3) d'un bus local (6), en particulier d'un bus en anneau, comprenant des participants de bus de données prêts à communiquer (7a, 7b, ..., 7n), le procédé comprenant :
la réception, au niveau d'un participant de bus de données prêts à communiquer (7a, 7b, ..., 7n), d'un premier paquet de données (17) provenant d'un maître de bus local (3) selon la revendication 12, le premier paquet de données (17) comportant une première valeur de compteur (23) ;
la modification de la première valeur de compteur (23) dans le premier paquet de données (17) par l'intermédiaire du participant de bus de données prêts à communiquer (7a, 7b, ..., 7n) ;
la réception d'un nombre de seconds paquets de données (17a, 17b, 17c) ; et
l'écriture d'une information mémorisée dans le participant de bus de données prêts à communiquer (7a, 7b, ..., 7n) dans un champ (20) d'un des seconds paquets de données (17a, 17b, 17c) lorsque le second paquet de données (17a, 17b, 17c) est affecté au participant de bus de données prêts à communiquer (7a, 7b, ..., 7n), et le premier paquet de données (17) et le nombre de seconds paquets de données (17a, 17b, 17c) étant du même type.

15. Un participant de bus de données prêts à communiquer (7a, 7b, ..., 7n) d'un bus local (6), en particulier d'un bus en anneau, comprenant un maître de bus local (3), le participant de bus de données prêts à communiquer (7a, 7b, ..., 7n) comprenant :
un moyen pour recevoir le premier paquet de données (17) issu du maître de bus local (3) selon la revendication 12, le premier paquet de données (17) comportant une première valeur de compteur (23) ;
un moyen pour modifier la première valeur de compteur (23) dans le premier paquet de données (17) ;
un moyen pour recevoir un nombre de seconds paquets de données (17a, 17b, 17c) ; et
un moyen pour écrire une information, mémorisée dans le participant de bus de données prêts à communiquer (7a, 7b, ..., 7n), dans un champ (20) d'un des deux paquets de données (17a, 17b, 17c) lorsque le second paquet de données (17a, 17b, 17c) est affecté au participant de bus de données prêts à communiquer (7a, 7b, ..., 7n), et le premier paquet de données (17) et le nombre de seconds paquets de données (17a, 17b, 17c) étant du même type.
